# FASCICULE DE BREVET EUROPEEN

(11) **EP 0 331 551 B1**
(45) Date de publication et mention de la délivrance du brevet: **07.04.1993**
(21) Numéro de dépôt: 89400427.4
(22) Date de dépôt: 15.02.1989
(51) Int. Cl.: G05B 19/04

(54) **Automate programmable par langage structuré**
Speicherprogrammierbare Steuerung mit strukturierter Programmiersprache
Programmable logic controller using a structured programming language

(30) Priorité: 26.02.1988 FR 8802422
(43) Date de publication de la demande: 06.09.1989
(73) Titulaire: APRIL S.A., F-78350 Jouy-en-Josas (FR)
(72) Inventeur: Mora, Vincent, F-81700 Semalens (FR)
(74) Mandataire: Plaçais, Jean-Yves

(56) Documents cités:
- EP-A- 0 090 302
- US-A- 4 282 584
- US-A- 4 488 258
- ELECTRONIQUE INDUSTRIELLES. no. 51, 15 avril 1983, PARIS FR pages 55 - 60; "LES AUTOMATES ET LA REGULATION PID"

## Description

L'invention concerne les automates programmables industriels.

On connaît déjà des automates programmables comprenant autour d'un processus à automatiser des moyens d'interface d'entrée avec des cartes de circuits capteurs et des moyens d'interface de sortie avec des cartes de circuits actionneurs. En vue de piloter le processus à automatiser, des moyens de traitement comprenant un programme moniteur ainsi qu'une mémoire traitent des valeurs actuelles des états d'entrée et des valeurs précédentes des états de sortie, stockées dans la mémoire à chaque cycle sous le contrôle du moniteur. Ladite mémoire contient également des lois de mise à jour des états de sortie en fonction de ces valeurs. Des moyens d'interface utilisateur permettent la programmation et la modification desdites lois.

Généralement, le processus à automatiser est piloté en fonction desdites lois de mise à jour des états de sortie. Ces lois sont une suite d'instructions placées en mémoire et comprennent notamment des codes exécutables manipulant des variables logiques telles que des variables numériques et booléennes, voir par exemple le document US-A-4 488 258.

Habituellement, la représentation fonctionnelle d'un automatisme est réalisée par la GRAFCET (graphe de commande Etapes/Transitions) qui est un outil de description permettant d'élaborer une vue globale de ce que l'automate va faire. Le GRAFCET permet également une analyse approfondie des différents comportements de l'automatisme en envisageant toutes les éventualités incluses dans le cahier des charges.

Toutefois, l'utilisation du GRAFCET, outil de description de l'automatisme, n'est efficace que si la technologie employée (langage de programmation de l'automate programmable) et la réalisation matérielle de l'automatisme correspondent à la transcription la plus directe possible du GRAFCET.

De plus, la mise en oeuvre de systèmes de commande programmés de plus en plus sophistiqués et performants requiert des moyens propres à conférer auxdits systèmes de commande programmés un degré optimal de sécurité et de qualité au niveau du langage de programmation et de l'interface utilisateur.

Un tel degré exige une hiérarchisation des fonctions de contrôle/commande, une structuration et une modularisation des programmes d'application en vue de maîtriser leurs développements, exploitation et maintenance.

Malheureusement, les langages de programmation actuels n'offrent pas ces possibilités.

L'invention vient apporter une solution à ce problème.

Un premier but de l'invention est de proposer un automate programmable qui permette de structurer selon différents niveaux de hiérarchie d'exécution des programmes d'application en vue notamment de transcrire le plus parfaitement et le plus directement possible la représentation en GRAFCET de l'automatisme à réaliser.

L'invention vise également à permettre d'organiser structurellement et fonctionnellement les programmes d'application en vue d'améliorer leur conception, leur utilisation et leur qualité, tout en respectant les recommandations normatives relatives aux langages de programmation des automates programmables.

Un autre but de l'invention est d'offrir un automate programmable permettant de détecter et de diagnostiquer ses propres pannes, ainsi que les pannes du processus à automatiser.

L'invention procure également à l'utilisateur de l'automate programmable la possibilité de créer des fonctions spécifiques à partir de fonctions de base proposées par le constructeur.

L'invention vise enfin à satisfaire les besoins des utilisateurs d'automates programmables notamment aux niveaux du contrôle d'accès aux programmes et aux données, de la modification en temps réel des programmes, de la modularité des programmes, de l'élaboration de dossiers d'information associés aux applications et d'une meilleure convivialité du langage de programmation autorisant un apprentissage et une utilisation rapide et facile de celui-ci.

L'invention porte sur un automate programmable, du type comprenant :
- des moyens d'interface d'entrée avec des cartes de circuits capteurs,
- des moyens d'interface de sortie avec des cartes de circuits actionneurs
- des moyens d'interface de communication avec des systèmes programmés comprenant d'autres automates programmables,
- des moyens de traitement comprenant un moniteur ainsi qu'une mémoire propre à contenir des valeurs actuelles des états d'entrée et des valeurs précédentes des états de sortie, stockés à chaque cycle sous le contrôle du moniteur, et des lois de mise à jour des états de sortie en fonction de ces valeurs, et
- des moyens d'interface utilisateur pour la programmation et la modification desdites lois.

Selon une définition générale de l'invention, ladite mémoire est au moins en partie structurée en sections constituées chacune d'entités programmables et modifiables par l'intermédiaire de l'interface utilisateur,
l'utilisateur sélectionnant au moins :
- une première section comprenant d'une part, des entités graphes maîtres, des entités graphes esclaves subordonnées chacune à au moins un graphe maître et des entités macro-étapes, ces entités graphes et macro-étapes étant essentiellement les seules à offrir des lois de mise à jour séquentielles à l'aide d'étapes et de transitions entre étapes,
   . d'autre part, des entités de traitement de graphes propres à gérer la dépendance entre graphes maîtres et graphes esclaves, des entités de traitement de tâches propres à effectuer des traitements validés par les étapes de graphes, maîtres ou esclaves, ou de macro-étapes, et des entités de traitement de réceptivité propres à valider des transitions des graphes, maîtres ou esclaves, ou des macro-étapes, les entités graphes et macro-étapes étant chacune susceptibles de prendre l'un de quatre états fonctionnels possibles :
   . un état actif dans lequel les lois de mise à jour séquentielles relatives à une entité graphe sont exécutées normalement;
   . un état inactif dans lequel les lois de mise à jour séquentielles relatives à une entité graphe ne sont pas exécutées;
   . un état gelé actif dans lequel les lois de mise à jour séquentielles relatives à une entité graphe ne peuvent évoluer, dans lequel les étapes associées à ladite entité graphe conservent leur état précédent et dans lequel les entités de traitement associées aux étapes actives de ladite entité graphe sont exécutées;
   . un état gelé inactif dans lequel les lois de mise à jour séquentielles relatives à l'entité graphe ne peuvent évoluer, dans lequel les étapes associées à ladite entité graphe conservent leur état précédent et dans lequel les entités de traitement associées aux étapes actives de ladite entité graphe ne sont pas exécutées;
      l'ensemble des entités de cette première section définissant l'intégralité des graphes requis pour une application particulière de l'automate;
- une seconde section comprenant une liste d'entités d'évènements rangés par priorité décroissante comprenant d'abord des évènements système de priorité maximale dont, dans l'ordre, la mise hors tension de l'automate, la présence de diagnostics, et la mise sous tension de l'automate, puis des évènements interface de priorité seconde relatifs aux états des cartes d'interface de l'application et enfin des évènements programmés de priorité tierce, définis à l'aide de code exécutable, et comportant en particulier des ordres destinés aux entités de graphes de la première section;
- une troisième section comprenant une entité désignant globalement l'application, une entité définissant les déclarations de données utiles à celle-ci, et une entité configuration définissant les cartes d'interface nécessaires à l'application, ainsi qu'au moins un état admissible de chacune desdites cartes d'interface de l'application pour le fonctionnement normal de l'automate;
- une quatrième section comprenant des entités combinatoires cycliques et des entités combinatoires de fond, ces entités offrant des lois de mise à jour essentiellement combinatoires à l'aide au moins d'expressions combinatoires et de boîtes fonctionnelles, les entités combinatoires cycliques étant susceptibles lorsqu'elles sont validées d'être exécutées totalement et consécutivement, tandis que les entités combinatoires de fond étant susceptibles lorsqu'elles sont validées d'être exécutées au moins partiellement à raison d'au plus une à chaque cycle, et
   le moniteur exécute à chaque cycle :
   . d'une part, une vérification de l'état des cartes d'interface de l'application en fonction des entités de la troisième section,
   . d'autre part, après acquisition de la table des entrées et des valeurs précédentes des sorties, d'un côté, en priorité, une prise en compte des traitements pouvant résulter d'entités évènements validées de la seconde section,
      de l'autre, les traitements résultant d'entités de la première section en cours de validité, puis les traitements résultant d'entités de la quatrième section en cours de validité,
      ce qui permet le lancement d'une application ainsi définie à partir de l'entité mise sous tension de la seconde section après exécution éventuelle de l'entité présence diagnostics.

Selon un mode de réalisation préféré du dispositif selon l'invention, l'automate programmable comprend en outre :
- des moyens d'interface de régulation avec des cartes de circuits de régulation;
- des moyens de traitement supplémentaires propres à traiter les informations de régulation provenant desdits circuits de régulation;
- l'utilisateur sélectionne en outre une cinquième section comprenant des entités de régulation et des boîtes fonctionnelles de régulation offrant des lois de fonctionnement de régulation à l'aide d'au moins une boucle de régulation et les moyens de traitement supplémentaires exécutent en parallèle au cycle automate, une application de régulation définie en fonction des entités et boîtes fonctionnelles de régulation.

Selon un autre mode de réalisation du dispositif selon l'invention, l'automate programmable comprend en outre :
- des moyens d'interface d'axes avec des cartes de circuits de trajectoires d'axes;
- des moyens de traitement supplémentaires propres à traiter les informations de trajectoires d'axes provenant desdits circuits de trajectoires d'axes; l'utilisateur sélectionne en outre une sixième section comprenant des entités trajectoires d'axes offrant des lois de fonctionnement de déplacement à l'aide d'au moins un module d'asservissement d'axes en vitesse et en position; et les moyens de traitement supplémentaires exécutent en parallèle au cycle automate, une application de déplacement d'axes définie en fonction des entités trajectoires d'axes et des boîtes fonctionnelles d'axes.

Plus particulièrement, les boîtes fonctionnelles comprennent des boîtes fonctionnelles constructeur propres à réaliser des fonctions standards constructeur dont les caractéristiques sont modifiables et programmables par ledit constructeur et des boîtes fonctionnelles utilisateur propres à réaliser des fonctions spécifiques utilisateur dont les caractéristiques sont modifiables et programmables par ledit utilisateur.

Les entités regroupent, dans une partie ayant un format fixe et commun à chaque entité, les informations et expressions essentielles de l'automatisme associé auxdites entités.

Avantageusement, chaque entité comprend au moins :
- un module "en-tête" regroupant les informations relatives à l'identification et à la validation de ladite entité;
- un module "commentaire" facultatif,
- un module "corps" regroupant les informations relatives au fonctionnement de l'automatisme associé à ladite entité.

En pratique, chaque entité de la première, seconde, quatrième et cinquième sections comprend en outre un module "bloc de constantes locales" regroupant des informations relatives aux constantes utilisables exclusivement dans ladite entité.

Selon un aspect de l'invention, le module "en-tête" de chaque entité comprend une donnée identificateur constructeur propre à individualiser ladite entité par ledit constructeur.

Selon un autre aspect de l'invention, le module "en-tête" de chaque entité comprend le cas échéant une donnée identificateur utilisateur propre à identifier symboliquement ladite entité par ledit utilisateur.

En pratique, chaque donnée identificateur constructeur comprend un préfixe d'au moins deux caractères alphabétiques précédé du caractère % et un numéro d'ordre.

Selon une autre caractéristique de l'invention, les informations relatives à la validation de chaque entité graphe de la première section comprennent une donnée représentant l'état fonctionnel de l'entité, une donnée représentant la durée maximale de l'entité à l'état actif, une donnée représentant le numéro d'ordre de l'étape présentant une durée d'activité différente de la durée d'activité définie par l'utilisateur pour ladite étape.

Selon une autre caractéristique de l'invention, les informations relatives à la validation de chaque entité de traitement de la première section et de chaque entité des deuxième, quatrième et cinquième sections comprennent une donnée représentant l'état de validation de ladite entité, une donnée représentant la durée maximale d'exécution, et des données représentant des points d'entrée de validation auxquels sont connectés la loi de validation résultant de la programmation.

Avantageusement, l'entité désignant globalement l'application comprend une entité identité regroupant les informations identifiant le programme de l'application, ainsi que des données clés d'accès autorisant l'accès aux programmes et aux données.

Plus particulièrement, l'entité identité comprend au moins une donnée nom du projet, une donnée code du programme, une donnée numéro de la version du programme, une donnée type d'automate, une donnée nom du responsable du projet et une donnée date de création du projet.

De préférence, les données clés d'accès comprennent au moins :
- une donnée "clé de modification en ligne" propre à autoriser toutes les fonctions y compris la modification du programme automate en fonctionnement;
- une donnée "clé d'accès concepteur" propre à autoriser toutes les fonctions sauf la modification en ligne du programme;
- une donnée "clé d'accès exploitant" propre à autoriser toutes les fonctions sauf la modification en ligne, le chargement de programme dans l'automate, le forçage des entrées et sorties, et la modification des données protégées;
- une donnée "clé de forçage" propre à autoriser, accompagnée de la clé d'accès exploitant, le forçage des variables d'entrée et de sortie;
- une donnée "clé de modification des données" propre à autoriser la modification des données déclarées protégées dans l'entité déclaration.

Selon encore une autre caractéristique de l'invention, les boites fonctionnelles comprennent au moins :
- une donnée "nom" représentant le code de ladite boîte;
- une donnée "condition" représentant la condition d'entrée nécessaire à la validation de l'exécution de la fonction associée à ladite boîte; et
- des données "paramètres" représentant des paramètres d'entrée internes et de sortie de ladite boîte.

Avantageusement, chaque entité possède au moins une représentation graphique décrivant graphiquement le fonctionnement de l'application associée à ladite entité et une représentation textuelle décrivant textuellement le fonctionnement de l'application associée à ladite entité.

En pratique, le code généré traite des données booléennes, numériques et alphabétiques.

D'autres caractéristiques et avantages de l'invention apparaîtront à l'examen de la description détaillée ci-après, et des dessins annexés, sur lesquels :
- la figure 1 est un synoptique d'un automate programmable selon l'invention;
- la figure 2 représente schématiquement la décomposition de la mémoire en sections contenant chacune des entités selon l'invention;
- la figure 3 représente schématiquement l'en-tête d'une entité graphe;
- la figure 4 représente schématiquement les relations de hiérarchie entre les entités de traitement d'évènements et les entités graphes selon l'invention;
- la figure 5 représente le diagramme d'états des graphes maîtres selon l'invention;
- la figure 6 représente le diagramme d'états des graphes esclaves selon l'invention;
- la figure 7 est une représentation graphique et textuelle d'une entité graphe maître selon l'invention;
- la figure 8 est une représentation graphique et textuelle d'une entité graphe esclave selon l'invention;
- la figure 9 est une représentation graphique et textuelle d'une entité macro-étape selon l'invention;
- la figure 10 représente schématiquement l'en-tête d'une entité combinatoire de type évènement interface;
- la figure 11 illustre schématiquement en mode graphique et textuel la représentation d'une entité évènement programmé selon l'invention;
- la figure 12 représente schématiquement les éléments essentiels et constitutifs d'une boîte fonctionnelle utilisateur selon l'invention;
- la figure 13 est un tableau récapitulatif des constantes utilisées dans un automate programmable selon l'invention;
- la figure 14 représente les variables numériques et booléennes utilisées dans un automate programmable selon l'invention;
- la figure 15 représente schématiquement les structures textuelles, numériques et booléennes utilisées dans un automate programmable selon l'invention; et
- la figure 16 illustre schématiquement le fonctionnement d'un automate programmable pendant un cycle automate selon l'invention.

Les dessins annexés comportent de nombreux éléments qui, pour l'essentiel, sont de caractère certain. En conséquence ils sont à considérer comme partie intégrante de la description, et pourront servir non seulement à mieux faire comprendre la description détaillée ci-après, mais aussi à compléter la définition de l'invention, le cas échéant.

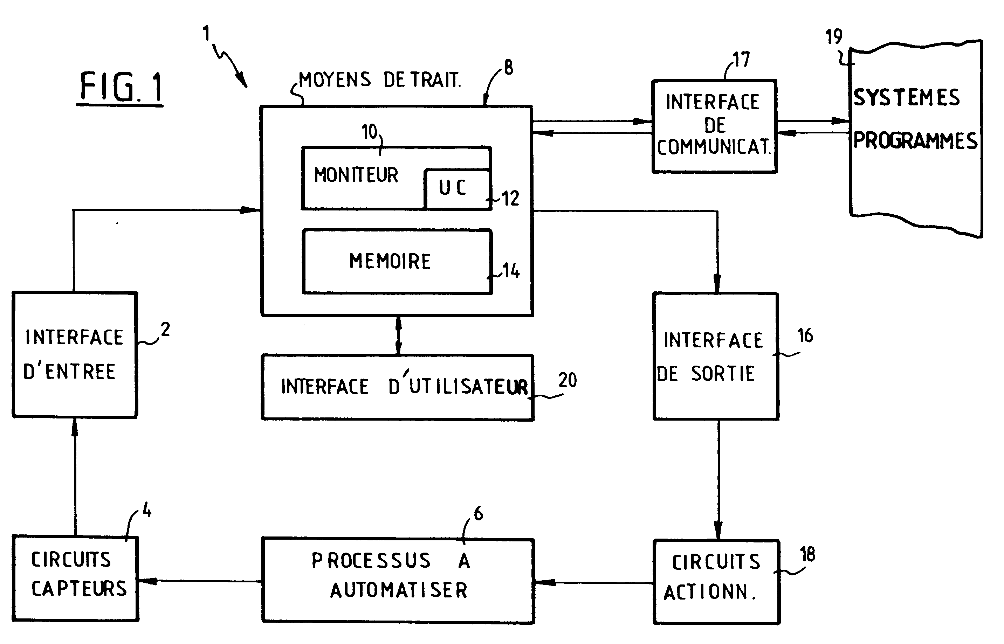

Sur la figure 1, la référence 1 désigne un automate programmable selon l'invention. L'automate programmable 1 comprend des moyens d'interface d'entrée 2 avec des cartes de circuits capteurs 4 branchés sur un processus à automatiser 6. Les circuits capteurs 4 sont par exemple des capteurs tout ou rien, de température, de position, des compteurs numériques etc...

En vue de piloter le processus 6, des informations provenant de ce dernier sont captées par les circuits capteurs et sont traitées via l'interface d'entrée 2 par des moyens de traitement 8. Ces moyens de traitement 8 comprennent un programme moniteur 10 associé à une unité centrale 12 et à une mémoire 14. L'unité centrale 12 est constituée d'au moins un microprocesseur pouvant être le modèle 68 000 de MOTOROLA.

En réponse aux informations captées par les circuits capteurs 4 et traitées par les moyens de traitement 8, des informations de commande sont délivrées par ces moyens 8 via une interface de sortie 16 à des circuits actionneurs 18 branchés sur le processus à automatiser 6.

L'automate programmable 1 peut faire partie d'un réseau de plusieurs automates programmables interconnectés entre eux à l'aide de circuits d'adaptation qui sont par exemple de type paire torsadée, câble coaxial ou fibre optique. Ainsi pour communiquer avec des systèmes programmés comprenant d'autres automates programmables, calculateur, robot, superviseur-opérateur, etc..., l'automate programmable 1 comprend des moyens d'interface de communication 17 entre les moyens de traitement 8 et lesdits autres systèmes de commande programmés 19. Les moyens d'interface de communication 17 sont de type interface série bidirectionnelle par exemple.

Les informations de commande délivrées par les moyens de traitement 8 sont déterminées à l'aide des valeurs actuelles des états d'entrée et des valeurs précédentes des états de sortie ainsi qu'à l'aide de lois de mise à jour des états de sortie en fonction desdites valeurs contenues dans la mémoire 14.

Des moyens d'interface utilisateur 20 sont reliées aux moyens de traitement 8 afin de permettre aux utilisateurs de programmer et de modifier lesdites lois de mise à jour. Les moyens d'interface utilisateur 20 sont par exemple une console de programmation. Dans le cas où le processus à automatiser 6 requiert des commandes de régulation et des commandes de trajectoires d'axes, l'automate programmable 1 peut être équipé en outre de moyens d'interface de régulation avec des cartes de circuits de régulation (non représentés) et des moyens d'interface d'axes avec des cartes de circuits de trajectoires d'axes (non représentés). Des moyens de traitement supplémentaires (non représentés) permettent de traiter les informations provenant desdits circuits de régulation d'axes.

La principale caractéristique de l'automate programmable selon l'invention est de permettre la structuration de ses programmes d'application.

Cette structuration est notamment obtenue d'une part grâce à la décomposition de la mémoire 14 en plusieurs sections constituées chacune d'entités programmables et modifiables par l'intermédiaire de l'interface utilisateur et d'autre part grâce à la hiérarchisation des entités de graphes et des entités d'évènements combinatoires.

Les sections classent selon leur nature (graphe, combinatoire, ...), l'ensemble des entités qui composent une application. Pour l'utilisateur de l'automate selon l'invention, les sections constituent un cadre figé dans lequel se rangent de manière ordonnée, les informations de même nature (renseignements, données, programme). Ainsi, par la connaissance de la nature des informations auxquelles sont associées les sections, il est permis une saisie des programmes et des données sans obligation de respecter un ordre strict, ni d'indiquer le nom des sections (c'est-à-dire qu'il est possible de saisir les informations de la seconde section avant celles de la première). La console de programmation prend en charge néanmoins le classement des différentes entités d'une application dans les sections respectives.

Une entité est un niveau intermédiaire permettant de regrouper de manière homogène et cohérente les données informatives ou les expressions d'une application. Pour l'utilisateur, les entités constituent un cadre adaptable permettant de décrire les renseignements relatifs à une application et d'organiser les traitements assurés par le programme, de la manière la plus adéquate vis-à-vis du découpage fonctionnel résultant de l'analyse d'un automatisme à réaliser.

Chaque entité comprend une partie dont le format est fixe et commun à chaque entité. Cette partie est constituée d'un module "en-tête" regroupant les informations relatives à l'identification et la validation de ladite entité; un module "commentaire" et un module "corps" regroupant les informations relatives au fonctionnement de la partie de l'automatisme associée à ladite entité.

Chaque entité comprend une donnée identificateur constructeur permettant de personnaliser ladite entité par ledit constructeur. Le cas échéant, chaque entité comprend en outre une donnée identificateur utilisateur permettant de personnaliser ladite entité par ledit utilisateur.

La personnalisation des entités par leurs identificateurs offre une aide à la programmation et à la modification desdites entités. Par exemple, l'appel auxdites entités s'effectue par l'intermédiaire de leurs identificateurs.

D'une manière générale, chaque donnée identificateur constructeur comprend un préfixe de deux caractères précédés du caractère % et suivis d'un numéro d'ordre.

Le constructeur établit une convention pour les identificateurs constructeurs de chaque entité. Par exemple, il associe l'identificateur %GMxx pour les entités graphes maîtres que l'on décrira ci-après, où xx est un numéro d'ordre s'écrivant sur deux caractères avec x chiffre entier.

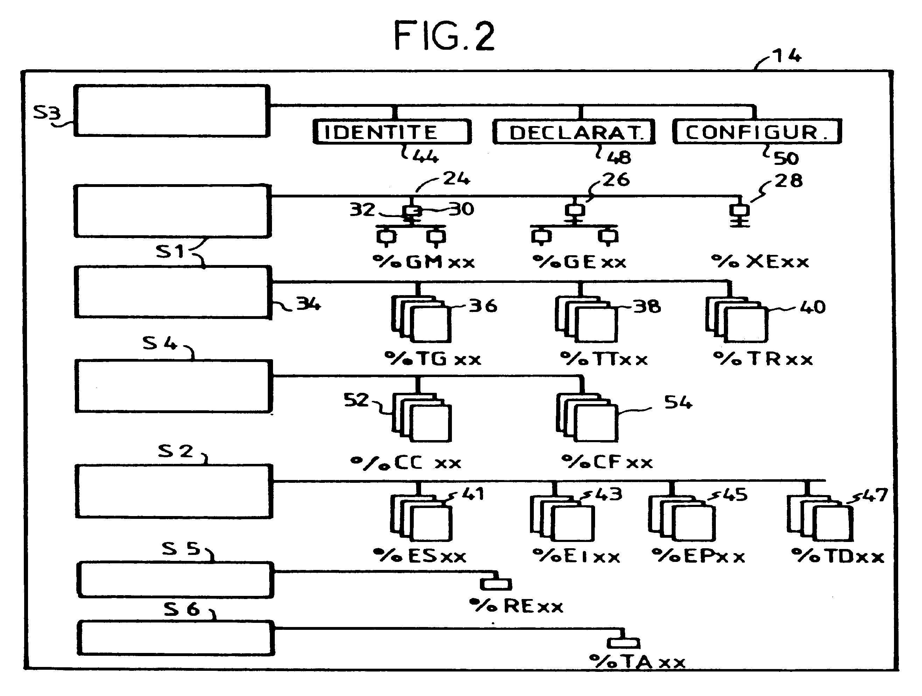

Comme représenté symboliquement sur la figure 2, la mémoire 14 est décomposée en plusieurs sections que l'utilisateur sélectionne à l'aide de l'interface utilisateur.

La première section S1 comprend d'une part des entités graphes maîtres 24 ayant comme donnée identificateur constructeur la donnée %GMxx, des entités graphes esclaves 26 subordonnées chacune à au moins un graphe maître, ayant une donnée identificateur constructeur %GExx et le cas échéant des entités macro-étapes 28 ayant une donnée identificateur constructeur %XExx.

Les entités graphes et macro-étapes sont essentiellement les seules à offrir des lois de mise à jour séquentielles à l'aide d'étapes 30 et de transitions entre étapes 32.

La première section S1 comprend d'autre part des entités de traitement de graphes 34 comprenant des entités de traitements gérant la dépendance entre graphes maîtres et graphes esclaves (données identificateur constructeur %TGxx), des entités de traitement de tâches 38 effectuant des traitements validés par les étapes de graphes, maîtres ou esclaves ou par les macro-étapes (données identificateur constructeur %TTxx) et des entités de traitement de réceptivité 40 validant des transitions des graphes, maîtres ou esclaves, ou des macro-étapes (données identificateur constructeur %TRxx).

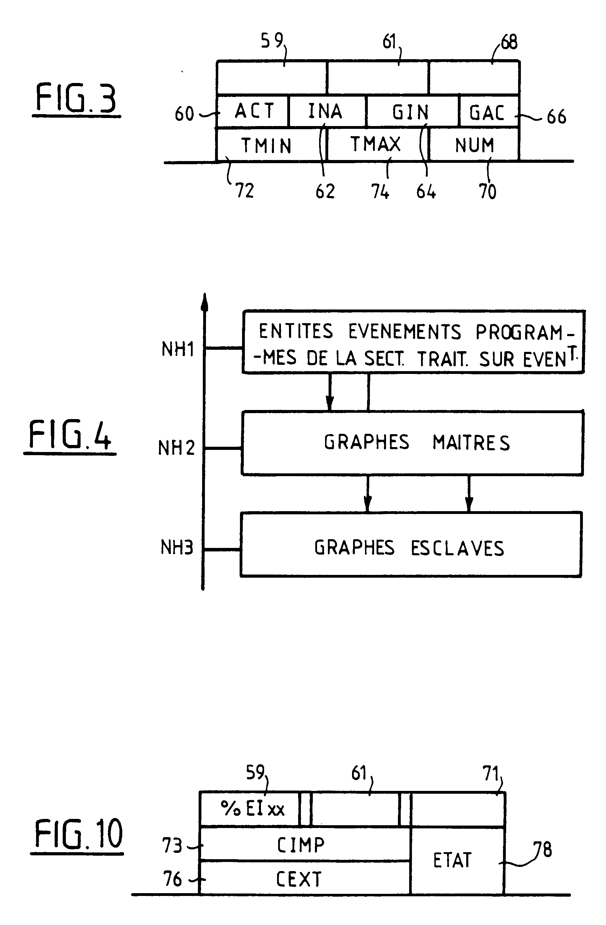

On se réfère maintenant à la figure 3 qui représente schématiquement un module "en-tête" d'une entité graphe. On y retrouve les données identificateur constructeur 59 et identificateur utilisateur 61.

Les entités graphes sont chacune susceptibles de prendre l'un des quatre états fonctionnels possibles matérialisés chacun par une case du module "en-tête". Ces quatre états fonctionnels possibles sont les suivants :
- un état actif ACT 60 dans lequel les lois de mise à jour séquentielles relatives à une entité graphe sont exécutées normalement. En d'autres termes, l'entité graphe possède au moins une étape active et peut évoluer;
- un état inactif INA 62 dans lequel les lois de mise à jour séquentielles relatives à une entité graphe ne sont pas exécutées. En d'autres termes, l'entité graphe ne possède aucune étape active et ne peut évoluer;
- un état gelé actif GAC 66 dans lequel les lois de mise à jour séquentielles relatives à une entité graphe ne peuvent évoluer, dans lequel les étapes associées à ladite entité graphe conservent leur état précédent et dans lequel les entités de traitement associées aux étapes actives de ladite entité graphe sont exécutées;
- un état gelé inactif GIN 64 dans lequel les lois de mise à jour séquentielles relatives à l'entité graphe ne peuvent évoluer, dans lequel les étapes associées à ladite entité graphe conservent leur état précédent et dans lequel les entités de traitement associées aux étapes actives de ladite entité graphe ne sont pas exécutées.

Le module "en-tête" comprend encore une donnée temps MAX matérialisée dans la case 68 représentant la durée maximale de l'entité à l'état actif. Trois autres données matérialisées respectivement dans les cases 70, 72 et 74 complètent le module "en-tête". Il s'agit de données relatives aux étapes des entités graphes. Par exemple, elles comprennent une donnée NUM 70 indiquant le numéro de l'étape de l'entité qui présente une durée d'activité inférieure à la durée d'activité définie par l'utilisateur pour ladite étape ou le numéro de l'étape de l'entité qui présente une durée d'activité supérieure à la durée d'activité définie par l'utilisateur pour ladite étape.

Les données 72 TMIN et 74 TMAX signalent par leur niveau logique (haut ou bas) le résultat de cette comparaison de durée d'activité.

Par exemple, la donnée TMIN de l'entité graphe maître %GM 40 est au niveau haut logique lorsque l'une de ses étapes dont le numéro est affiché dans la case NUM est restée active pendant une durée inférieure à la durée d'activité définie par l'utilisateur pour ladite étape.

En outre, dans le but de faciliter le diagnostic des pannes d'une application, il est possible d'associer à chaque étape des données indiquant la durée d'activité minimum et la durée d'activité maximum desdites étapes. Ces durées permettent de borner le temps pendant lequel une étape doit rester active en fonctionnement normal. Chacune de ces durées est surveillée par l'automate programmable. Lorsqu'il y a dysfonctionnement, l'automate programmable le signale en précisant l'étape concernée.

La partie "commentaire" est optionnelle et donne la possibilité d'associer un libellé à l'entité. La taille du "commentaire" est libre.

Le "corps" de l'entité graphe contient la structure séquentielle décrivant l'automatisme à réaliser. Il est obligatoire pour toutes les entités séquentielles.

Les structures séquentielles sont construites à partir d'étapes auxquelles sont associés des traitements, à partir de transition auxquels sont associées une réceptivité et à partir de liaisons orientées.

On se réfère à la figure 4 qui illustre les relations de hiérarchie entre les entités évènements de la deuxième section (traitement sur évènements) que l'on décrira ci-après et les entités graphes de la première section.

Le langage de programmation structurée de l'automate programmable selon l'invention définit trois niveaux hiérarchiques désignés NH1 à NH3. Le niveau NH1 est le niveau hiérarchique supérieur.

Le niveau NH1 est composé d'entités évènements appartenant à la seconde section. Il peut générer des ordres vers les structures séquentielles graphes maîtres et graphes esclaves.

Le niveau NH2 est assuré par les graphes maîtres. Il peut générer des ordres vers des structures séquentielles graphes esclaves.

Le niveau NH3 est assuré par la classe des graphes esclaves. Il ne peut pas générer d'ordres ni appels vers d'autres entités.

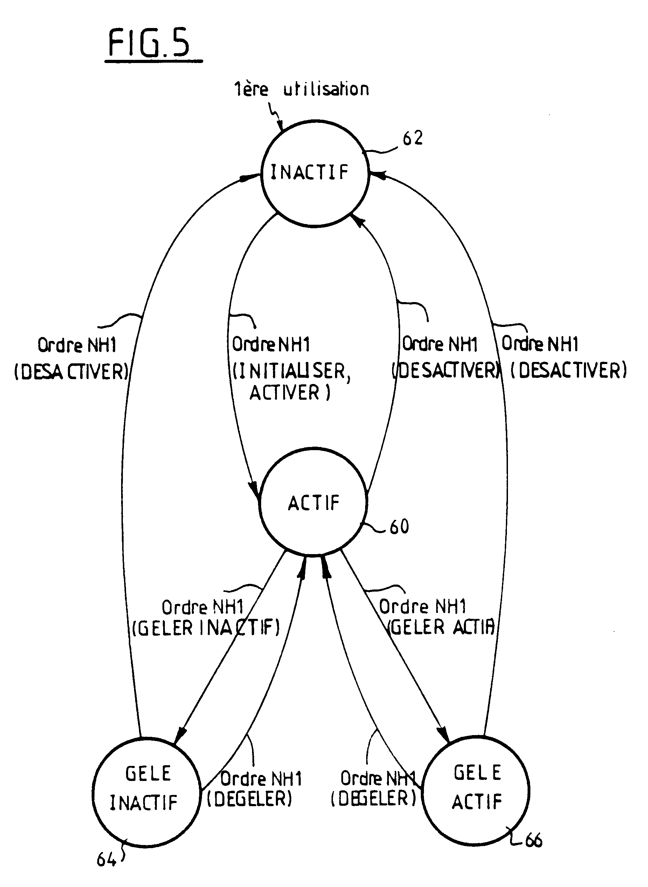

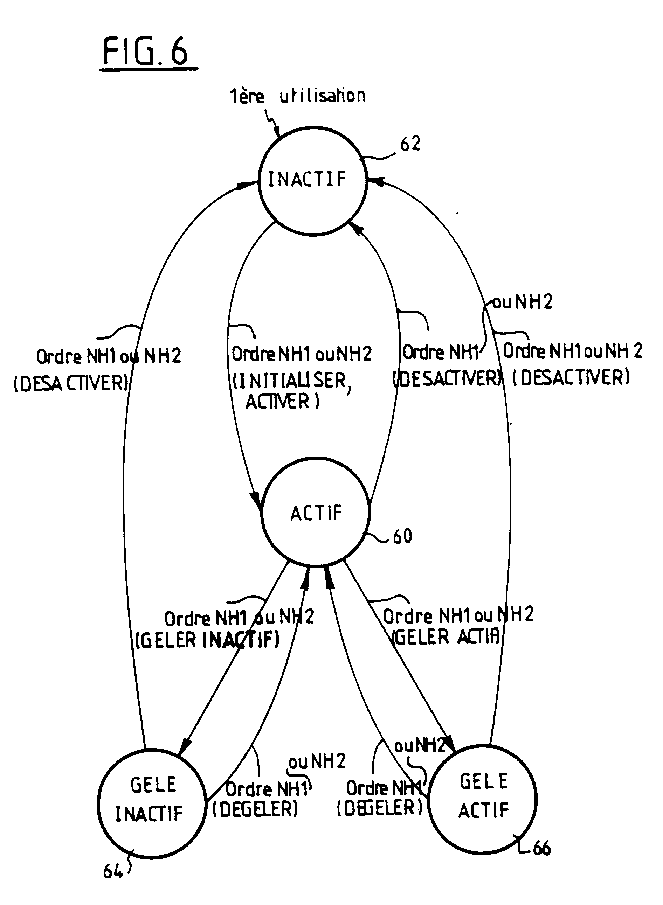

On se réfère maintenant aux figures 5 et 6 qui illustrent à l'aide de diagrammes d'états le fonctionnement des graphes maîtres et esclaves.

A la première utilisation ou à l'initialisation de tout programme d'application un graphe maître est à l'état inactif 62. Un ordre d'initialisation ou d'activation provenant de la seconde section NH1 permet de placer le graphe maître à l'état actif 60 dont les caractéristiques fonctionnelles ont été détaillées ci-avant. Un ordre provenant de la seconde section NH1 permet de placer le graphe maître à l'état gelé actif 66 ou bien à l'état gelé inactif 64. Un ordre de dégel provenant de la seconde section permet de replacer le graphe maître à l'état actif 60. Un ordre de désactivation provenant toujours de la seconde section permet de replacer le graphe maître à l'état inactif 62.

A la première utilisation ou à l'initialisation de tout programme d'application un graphe esclave est à l'état inactif 62. Un ordre provenant de la seconde section (NH1) ou un ordre provenant d'un graphe maître place le graphe esclave à l'état actif 60. De façon similaire un ordre provenant de la seconde section ou bien d'un graphe maître place le graphe maître de l'état actif 60 à l'état gelé actif 66 ou bien de l'état actif 60 à l'état gelé inactif 64, de même un ordre de dégel permet de replacer le graphe esclave à l'état actif 60, enfin un ordre provenant de la seconde section (NH1) ou un ordre provenant d'un graphe maître (NH2) permet de placer le graphe esclave à l'état inactif 62.

En correspondance de leurs états fonctionnels, les graphes se comportent de la façon suivante.

Pour passer à l'état actif 60, le graphe maître ou esclave doit d'abord être placé à l'état inactif 62, ou avoir été préalablement placé soit à l'état gelé actif 66, soit à l'état gelé inactif 64.

Un graphe esclave peut dépendre de plusieurs graphes maîtres ou de la section traitement sur évènements que l'on traitera plus loin.

Les règles de construction gérant les structures séquentielles sont les suivantes :
- l'alternance étape/transition et transition/étape doit toujours être respectée;
- une étape avec traitement associé ne fait référence qu'à une seule donnée identificateur constructeur ou identificateur utilisateur en cohérence avec son type (constructeur ou utilisateur);
- les structures séquentielles graphes maîtres et graphes esclaves peuvent présenter une ou plusieurs étapes initiales;
- les structures séquentielles graphes maîtres et graphes esclaves ont une structure de type fermée c'est-à-dire que toute étape a au moins une transition amont et une transition aval sauf le cas particulier de l'étape initiale qui peut ne pas avoir de transition amont. D'autre part, toute transition a au moins une étape amont et une étape aval;
- les structures séquentielles macro-étapes présentent obligatoirement une seule étape d'entrée et une seule étape de sortie.

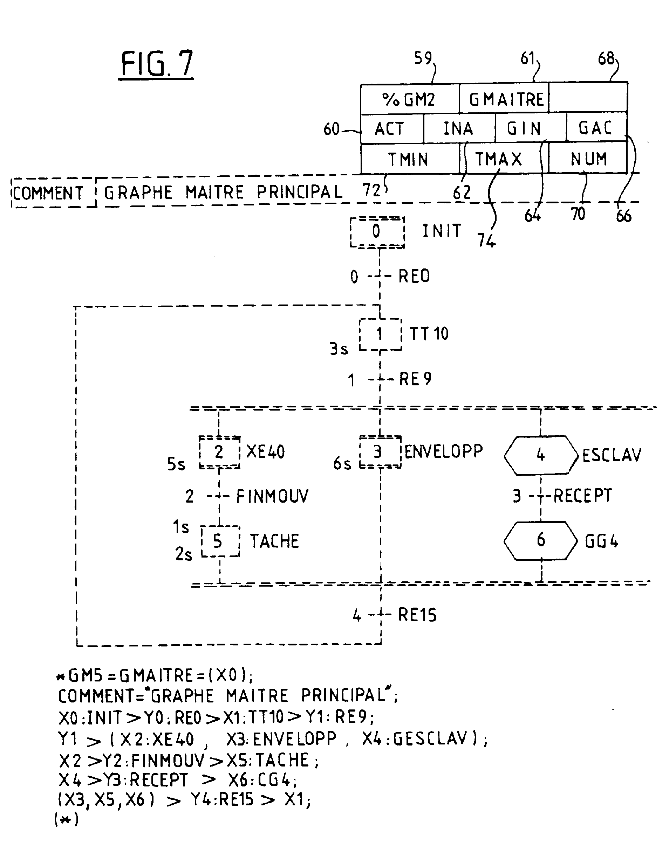

On fait maintenant référence à la figure 7 qui illustre le fonctionnement d'une entité graphe maître en mode graphique à l'aide d'étapes, de transitions entre étapes et de liaisons orientées et en mode textuel à l'aide de chaînes alphanumériques formatées.

En mode graphique on a représenté "l'en-tête" de l'entité dans lequel on retrouve l'identificateur constructeur %GM2, l'identificateur utilisateur GMAITRE, les états fonctionnels de l'entité ainsi que les données relatives à la durée d'activité de ladite entité.

On voit également un "commentaire" concernant ladite entité graphe maître.

On voit enfin le "corps" de l'entité constitué de la structure séquentielle de ladite entité. On y retrouve une étape initiale 0 (INIT). Le passage de l'étape 0 à l'étape 1 s'effectue via une réceptivité 0 (RE0). Une divergence permet de passer de l'étape 1 via une réceptivité 1 (RE9) à soit l'étape 2, soit l'étape 3, soit l'étape 4. L'étape 2 constitue une macro-étape XE40, l'étape 3 est une autre macro-étape. Les passages de l'étape 2 à l'étape 5 et de l'étape 4 à l'étape 6 s'effectuent respectivement via une réceptivité 2 et une réceptivité 3. Une convergence permet de passer des étapes 5, 3 et 6 à l'étape 1 via une réceptivité 4 (RE15).

En regard des étapes il est indiqué le cas échéant, la durée d'activité minimum ou maximum de l'étape, par exemple trois secondes d'activité maximum pour l'étape 1, une seconde d'activité minimum et deux secondes d'activité maximum pour l'étape 5.

On peut représenter le "corps" de l'entité graphe maître à l'aide d'un texte. Ce mode textuel s'inspire dans son formalisme des propositions de la commission API du Groupe de Travail Equipement de Production Automatisée de l'Agence pour le Développement de la Production Automatisée.

On y retrouve sous une forme textuelle abrégée tous les éléments constitutifs et essentiels de l'entité graphe maître. Les termes abrégés (donnée identificateur généralement) de ces éléments sont séparés par des signes (:, >) indiquant les relations existant entre lesdits éléments.

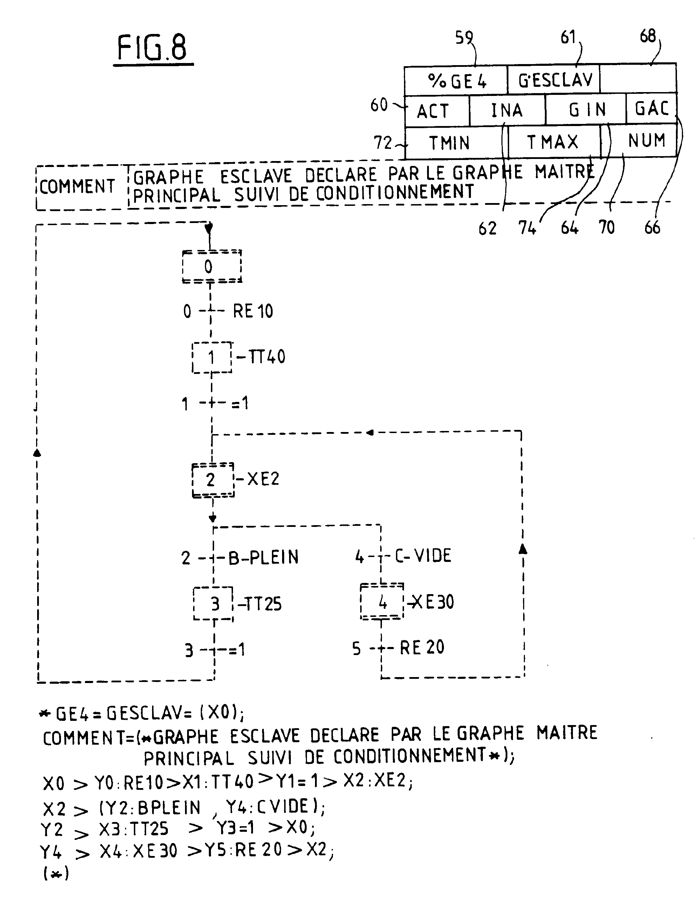

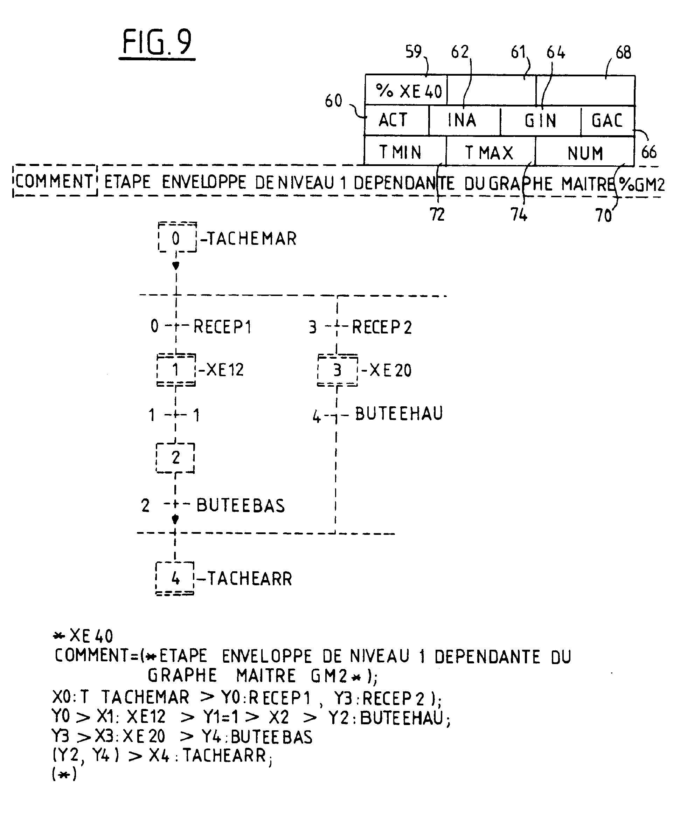

Sur les figures 8 et 9 on a représenté en mode graphique et en mode textuel le fonctionnement d'une entité graphe esclave et d'une macro-étape. Les fonctionnements d'une entité graphe esclave et d'une macro-étape ont des représentations graphique et textuelle similaires à celles d'une entité graphe maître.

On se réfère à nouveau à la figure 2 dans laquelle on voit que la seconde section S2 comprend une liste d'entités évènements rangées par priorité décroissante et conditionnées par l'apparition d'évènements. On distingue tout d'abord des entités d'évènements système 41, de priorité maximale, relatives à l'état de fonctionnement de l'automate programmable, puis des entités d'évènements interface 43, de priorité seconde, relatives aux états des cartes d'interface, et enfin des entités d'évènements programmés 45, de priorité tierce, relatives aux ordres programmés destinés aux entités de graphe. Les données identificateur constructeur de ces entités sont respectivement %ESxx pour les évènements systèmes, %EIxx pour les évènements interfaces et %EPxx pour les évènements programmés.

Ces entités évènements sont à caractère combinatoire exclusivement et sont composées d'expressions combinatoires.

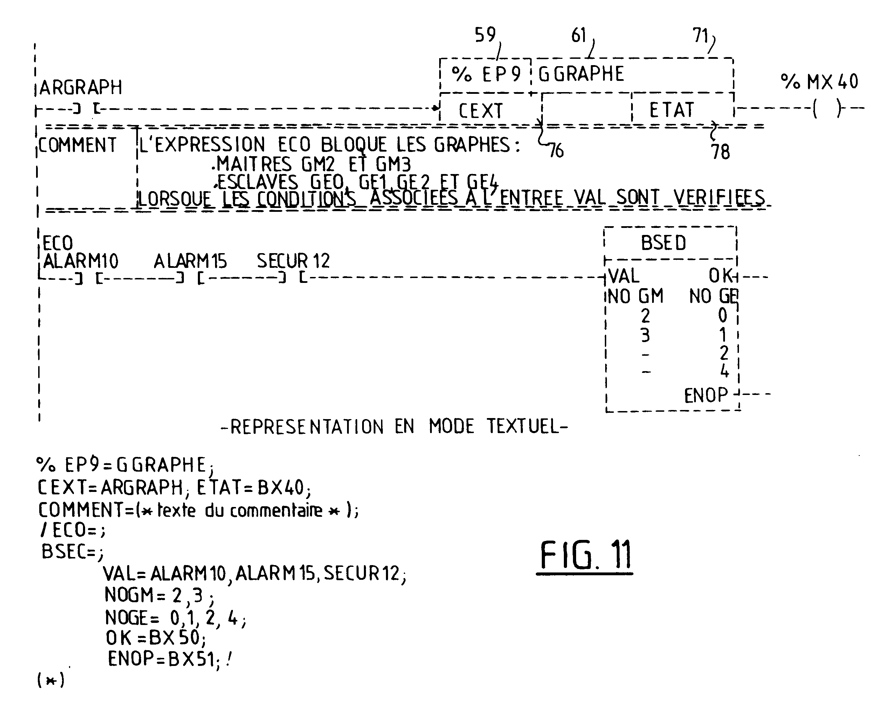

On se réfère maintenant à la figure 10 qui illustre d'une façon schématique le module "en-tête" d'une entité combinatoire par exemple une entité évènement interface 43 de la deuxième section S2.

Il y apparaît une donnée identificateur constructeur 59 %EIxx ainsi qu'une donnée identificateur symbolique utilisateur 61, une donnée 71 représentant la durée maximale d'exécution et des données CIMP 73 et CEXT 76 représentant des points d'entrée de validation auxquels sont connectées la loi de validation résultant de la programmation et une donnée état 78 représentant l'état fonctionnel (actif, inactif) de ladite entité combinatoire.

La donnée 73 CIMP est issue d'une logique de validation implicite et apparaît automatiquement. La donnée 76 CEXT est issue d'une logique qui est extérieure et programmée par l'utilisateur.

Dans le mode de réalisation de l'invention, les entités évènements systèmes %ESxx (numérotées de 0 à 31) sont prédéfinies par le constructeur. Par exemple la première entité évènement %ES0 de priorité maximale est l'évènement mis hors tension de l'automate pour lequel le point de validation implicite CIMP est la détection de la coupure du secteur.

La seconde entité évènement système peut être par exemple la présence de diagnostics de l'automate qui couvre une liste d'entités traitement de diagnostics %TDxx (numérotée 47 sur la figure 2) et la troisième est par exemple la mise sous tension de l'automate.

On fait maintenant référence à la figure 11 qui représente en mode graphique à l'aide de schémas relais et de réseaux et en mode textuel à l'aide de chaînes alphanumériques formatées le fonctionnement d'une entité évènement programmé 45. On a représenté à titre d'exemple l'entité évènement programmé %EP9 appelée GGRAPHE par l'utilisateur. Elle est validée par la variable ARGRAPH. La donnée 78 ETAT valide la variable %MX40. Un commentaire annonce l'application réalisée par ladite entité évènement programmé. Le "corps" de ladite entité présente l'expression combinatoire ECØ qui réalise le blocage des graphes maîtres 2 et 3 ainsi que le blocage des graphes esclaves 0, 1, 2 et 4 lorsque les conditions associées à l'entrée VAL sont vérifiées.

Les expressions combinatoires des entités combinatoires sont constituées d'une partie opération comprenant des expressions logiques et/ou des boîtes fonctionnelles que l'on décrira plus en détail ci-après et d'une partie résultat affectée à au moins une action. Le résultat booléen d'une expression combinatoire peut être affecté à une ou plusieurs actions tandis qu'un résultat numérique est affecté à une seule variable numérique.

Une caractéristique de l'automate selon l'invention est l'utilisation de boîtes fonctionnelles notamment celles dites boîtes fonctionnelles utilisateur permettant à ce dernier de créer des fonctions spécifiques.

Les boîtes fonctionnelles décrivent de manière compacte et graphique des opérations ou fonctions plus ou moins complexes. Elles permettent de réaliser un traitement qui génère des informations de commande de type booléen ou numérique. Elles permettent également de réaliser un traitement de contrôle complémentaire au traitement de commande précédent permettant de générer des informations de défaut ou des déroutements logiciels qui constituent des alarmes en cas d'incohérence. Leur utilisation dans les programmes d'application permet aux utilisateurs d'élaborer en particulier leur propre solution de diagnostic et de traitement de défauts.

On distingue les boîtes fonctionnelles constructeur propres à réaliser des fonctions standards constructeur dont les caractéristiques sont modifiables et programmables par le constructeur et des boîtes fonctionnelles utilisateur propres à réaliser des fonctions spécifiques utilisateur dont les caractéristiques sont modifiables et programmables par ledit utilisateur.

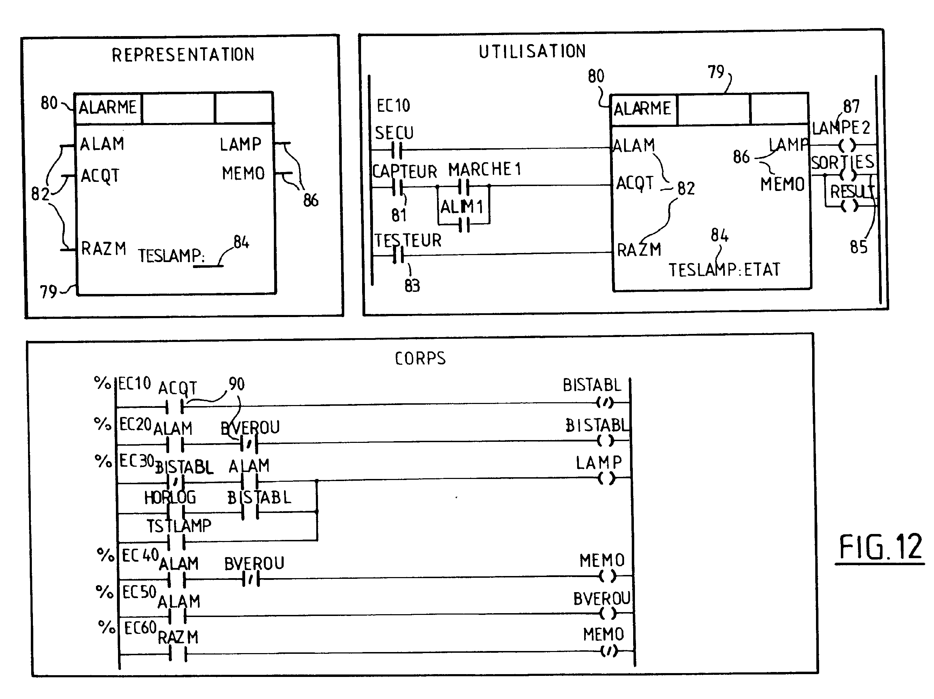

On se réfère maintenant à la figure 12 qui représente schématiquement une boîte fonctionnelle utilisateur 79. La représentation graphique d'une boîte fonctionnelle utilisateur comprend notamment un nom de code 80 qui désigne l'opération, des conditions d'entrée 82 qui valident l'exécution de l'opération sur une variable de niveau ou sur une variable de front, des paramètres internes 84 et des variables de sortie 86.

A titre d'exemple, on a reporté une boîte fonctionnelle utilisateur ALARM ayant pour fonction la détection d'une anomalie de fonctionnement de la marche d'un atelier de production. Cette fonction alarme se matérialise par exemple par un signal lumineux clignotant.

Les conditions d'entrée qui valident l'exécution de l'opération peuvent être constituées d'une part de voyants ALARM regroupés dans des boîtiers lumineux avec inscription en clair de la nature du défaut sur chacun des voyants et d'autre part de boutons-poussoirs. Ces boutons-poussoirs peuvent être par exemple un bouton d'acquittement par alarme (ACQT), un poussoir de remise à zéro de la mémorisation par alarme (RAZM), un poussoir de test lampe (TESLAMP). En sortie, la boîte fonctionnelle est par exemple reliée à des lampes (LAMP) et une sortie mémoire (MEMO) enregistrant le résultat de cette boîte fonctionnelle.

On retrouve également sur cette figure 12 le "corps" ou logique de la boîte fonctionnelle. Dans le corps de la boîte fonctionnelle, on retrouve les expressions combinatoires %ECn (%ECIO par exemple) avec n entier qui interviennent dans la validation des conditions d'entrée permettant l'exécution de la fonction de la boîte fonctionnelle (déclenchement d'une alarme par exemple). La logique de validation de la boîte est exprimée à l'aide de symboles 90(-II-,┤/├()┤) exprimant les opérations logiques de base (ET, OU, affectation, égal, négation des instructions précédentes), affectées aux paramètres d'entrée 82, internes 84 et de sortie 86.

Une boîte fonctionnelle est destinée à être utilisée avec des données décrites par l'utilisateur concernant par exemple des capteurs et des actionneurs. On a également représenté sur la figure 12, la boîte fonctionnelle 79 dans le cadre de son utilisation. La boîte 79 a en entrée des données booléennes 81 et 83 et en sortie des actions 85 et 87.

En se référant à nouveau à la figure 2, on voit que la mémoire 14 comprend une troisième section S3 constituée des entités d'identification. Ces entités comprennent une entité désignant globalement l'application à l'aide d'une part d'une entité identité 44 regroupant les informations identifiant le programme de l'application et les données clés d'accès constituant les informations autorisant l'accès aux programmes et aux données. Les entités d'identification comprennent également une entité "déclaration" 48 définissant les déclarations de données utiles à l'application et une entité "configuration" 50 définissant les cartes d'interface nécessaires à l'application, ainsi qu'au moins un état de chacune desdites cartes d'interface de l'application admissible pour le fonctionnement normal de l'automate.

L'entité "identité" regroupe les informations que l'utilisateur définit pour identifier le programme de l'application. L'entité "identité" se compose des rubriques suivantes :
- nom du projet,
- code du programme,
- numéro de la version du programme d'application,
- type d'automate,
- nom du responsable,
- date de création,
- clés d'accès.

Parmi les rubriques ci-dessus, seule la rubrique code du programme est obligatoire car son contenu sert d'identificateur de programme.

Les clés d'accès sont des informations (mots de passe) que l'utilisateur définit pour autoriser ou non les accès aux programmes et/ou aux données via l'interface utilisateur 20.

Cette rubrique se décompose en une clé modification en ligne, une clé concepteur, une clé exploitant, une clé forçage et une clé modification de données protégées. La clé modification en ligne permet l'accès à toutes les fonctions y compris la modification du programme automate en fonctionnement. La clé d'accès concepteur permet l'accès à toutes les fonctions, sauf la modification en ligne du programme.

La clé exploitant permet l'accès à toutes les fonctions sauf la modification en ligne, le chargement de programme dans l'automate , le forçage des entrées et sorties et la modifications des données protégées.

La clé forçage accompagnée de la clé exploitant permet l'accès au forçage des entrées et des sorties.

La clé modification des données protégées accompagnée de la clé exploitant permet la modification desdites données.

On remarquera que l'utilisation de chacune de ces clés est optionnelle. Si aucune clé n'a été définie lors de la création de l'application, par l'utilisateur, aucun contrôle d'accès n'est effectué et chaque intervenant se trouve donc sous le mode correspondant.

Les clés sont modifiables selon les privilèges de priorité suivant :
- le possesseur de la clé modification en ligne peut modifier les 5 clés,
- le possesseur de la clé concepteur peut modifier sa clé et les 3 clés suivantes exploitant, forçage et modification de données,
- le possesseur de la clé exploitant peut modifier sa clé et les 2 clés suivantes forçage et modification de données,
- le possesseur de la clé forçage peut modifier sa clé et la clé modification de données,
- le possesseur de la clé modification de données peut modifier uniquement sa clé.

L'entité déclaration regroupe les déclarations et initialisations relatives aux opérandes ou données de l'application, ainsi que la description des contraintes particulières définies par l'utilisateur que la programmation et l'exploitation de l'application doivent respecter.

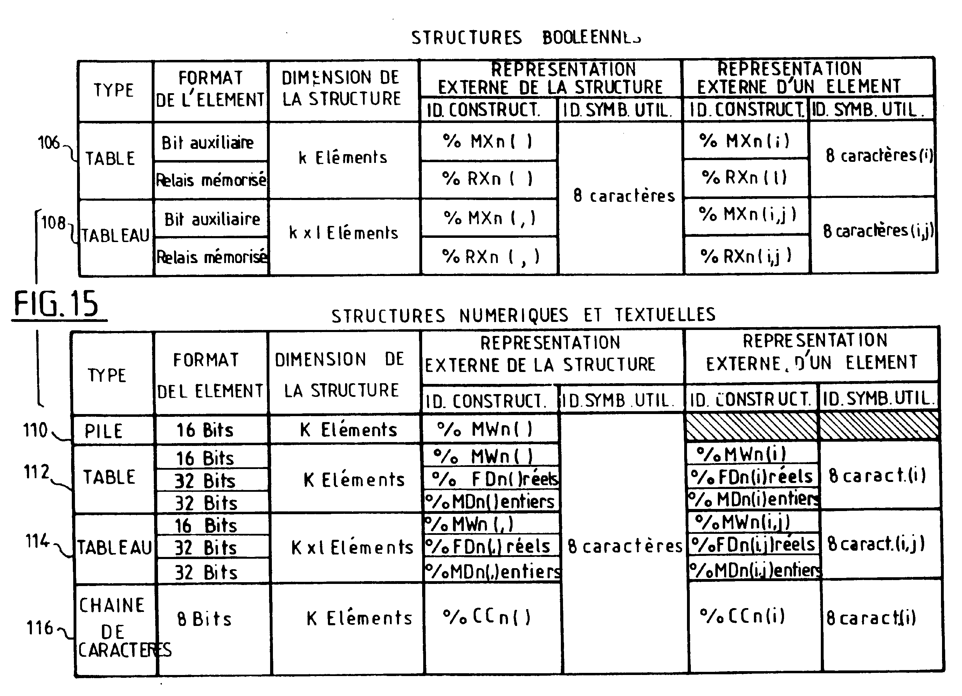

Dans le cadre de l'entité déclaration, l'utilisateur peut créer des variables front à partir de variables simples que l'on décrira plus en détail ci-après. Il peut également créer des structures de données booléennes, numériques et textuelles que l'on décrira en détail ci-après (figure 15) ou associer aux identificateurs constructeurs, un identificateur utilisateur, ou bien encore ajouter un commentaire, une valeur initiale, une valeur minimale, une valeur maximale, un attribut modifiable ou protégé.

L'entité déclaration n'a pas de caractère obligatoire mais elle permet :
- la programmation sous une forme symbolique utilisateur,
- l'initialisation des variables, de manière automatique avant toute première exécution du programme par l'automate, ou sur condition programmée,
- la prise en compte des informations qui serviront à l'élaboration du dossier de l'application par la console de programmation, et
- le contrôle des actions de modification et de forçage sur les données de l'application, ainsi que de modification sur le programme de l'application.

L'entité configuration regroupe les informations qui décrivent la configuration matérielle de l'automate nécessaire à l'application. La configuration de l'automate définit chaque emplacement de chaque rack selon sa nature et sa fonction.

L'entité configuration permet :
- de réaliser un contrôle avant l'exécution du programme d'application traduisant la conformité entre la configuration décrite dans l'entité et la configuration réelle en place;
- de vérifier la conformité de l'application avec la configuration décrite, et
- de pré-définir par l'utilisateur la configuration des cartes qui sont paramétrables par programme;
- de définir par l'utilisateur le comportement que doit respecter l'automate en cas d'apparition des diagnostics internes prévus par le constructeur.

D'une manière générale, la représentation graphique des entités de la troisième section est réalisée par l'intermédiaire de la console de programmation à l'aide de masques écrans.

La mémoire 14 comprend également une quatrième section comprenant d'une part des entités combinatoires cycliques 52 et d'autre part des entités combinatoires de fond 54. Ces entités combinatoires offrent des lois de mise à jour essentiellement combinatoires à l'aide au moins d'expressions combinatoires %ECn contenant des opérandes logiques booléennes, numériques et textuelles décrites ci-après en référence à la figure 15 et à l'aide de boîtes fonctionnelles.

Les entités combinatoires cycliques sont susceptibles lorsqu'elles sont validées d'être exécutées totalement et consécutivement tandis que les entités combinatoires de fond sont susceptibles, lorsqu'elles sont validées, d'être exécutées au moins partiellement et au plus une à chaque cycle. Les entités combinatoires de fond ont la priorité la plus faible au niveau de priorité d'exécution par l'automate. En d'autres termes, l'exécution d'une entité combinatoire de fond ne commence que si aucune autre n'est en cours d'exécution. Enfin, une entité combinatoire de fond peut s'effectuer sur plusieurs cycles consécutifs.

La prise en compte et l'exécution des entités combinatoires de fond sont basées sur une validation de type front. La gestion des validations n'est pas réalisée par l'automate. Il en découle que la validation de chaque entité doit être maintenue jusqu'à la fin de l'exécution de l'entité ou tout au moins jusqu'à sa prise en compte pour son exécution. Les entités combinatoires de fond n'ont pas de point d'entrée de validation implicite tels que ceux des entités sur évènenement 73 (CIMP). La validation des entités combinatoires de fond s'effectue par le point d'entrée de validation extérieur 76 (CEXT).

La mémoire 14 comprend également une cinquième section S5 comprenant des entités de régulation %REXX.

Ces entités de régulation sont constituées d'expressions combinatoires et d'expressions de régulation comprenant des boîtes fonctionnelles de régulation. Elles offrent des lois de fonctionnement de régulation à l'aide de boucles de régulation.

La représentation et le fonctionnement des entités de régulation et des boîtes de régulation sont semblables à la représentation et au fonctionnement des entités décrites précédemment en référence aux figures 1 à 12. Elles n'en diffèrent que par leur traitement qui est parallèle au cycle automate. Ce traitement parallèle est réalisé par une unité centrale supplémentaire en relation avec des circuits de régulation branchés sur le processus à automatiser et à réguler.

La mémoire 14 comprend enfin une sixième section S6 comprenant des entités trajectoires d'axes (%TAXX). Ces entités trajectoires d'axes permettent d'offrir des lois de fonctionnement de déplacement à l'aide d'au moins un module d'asservissement d'axes en vitesse et en position.

La représentation et le fonctionnement de ces entités trajectoires d'axes sont semblables à la représentation et au fonctionnement des entités décrites précédemment en référence aux figures 1 à 12. Elles n'en diffèrent que par leur traitement qui est effectué comme celui de la cinquième section par des moyens de traitement supplémentaires, en parallèle avec le cycle automate.

L'asservissement d'axes s'effectue à l'aide d'informations provenant de circuits d'axes branchés sur le processus à automatiser et à asservir.

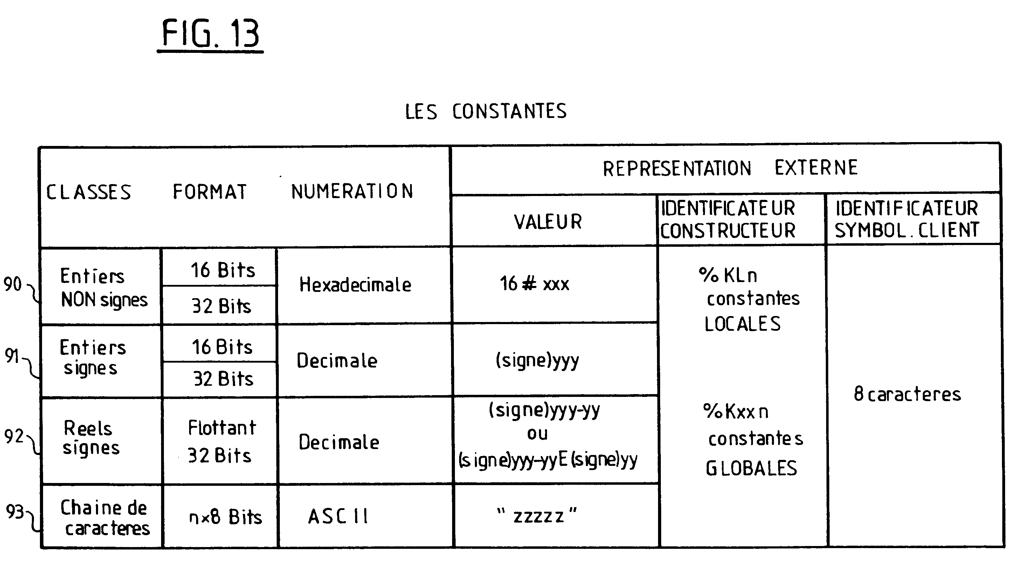

Sur la figure 13, on a représenté sous la forme d'un tableau récapitulatif les constantes utilisées dans l'automate programmable selon l'invention.

Les constantes numériques se décomposent en quatre classes.

Une première classe 90 est formée de nombres entiers non signés de 16 ou de 32 bits en numération hexadécimale. La valeur des constantes de la première classe s'écrit sous la forme XXX où X est un chiffre hexadécimal.

Une seconde classe 91 est constituée de nombres entiers signés de format 16 ou 32 bits en numération décimale. La valeur des constantes de la seconde classe s'écrit sous la forme YYY précédé du symbole + ou - et où Y est un chiffre décimal.

Une troisième classe 92 est constituée de nombres réels signés de format de 32 bits avec une numération décimale. La valeur des constantes de la troisième classe peut être accompagnée d'un signe d'exposant (E) et du point de séparation de la partie entière et de la partie décimale des nombres réels.

Une quatrième classe 93 est constituée de chaînes de caractères alphanumériques d'un format de N x 8 bits en code ASCII.

Les constantes de chaque classe comprennent une donnée identificateur constructeur. Ces constantes peuvent être des constantes locales ou globales. Elles comprennent également une donnée identificateur utilisateur d'une longueur de huit caractères.

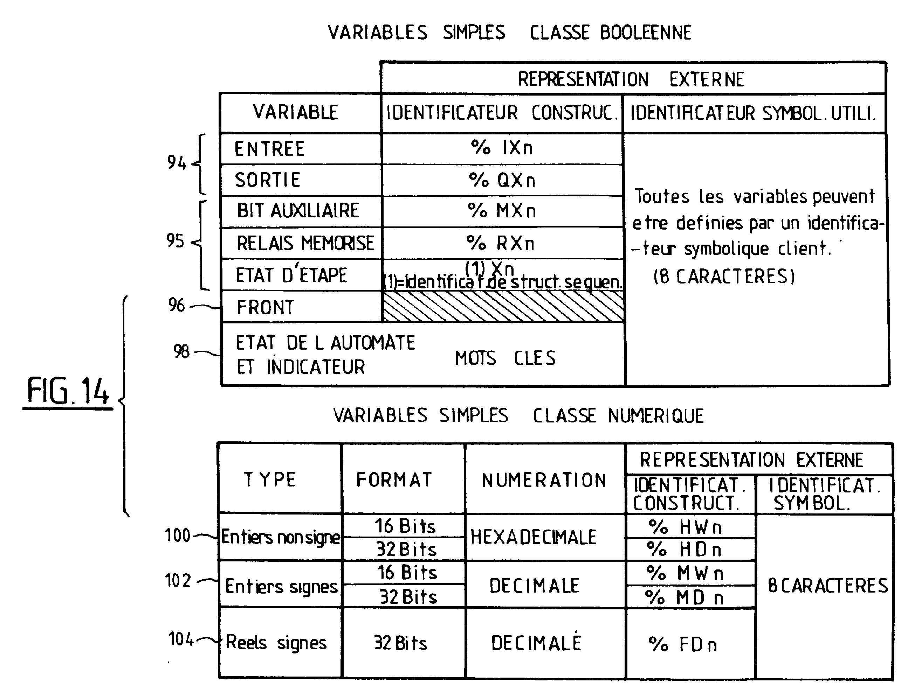

Sur la figure 14, on a représenté sous la forme d'un tableau récapitulatif les variables simples booléennes et numériques utilisées dans l'automate programmable selon l'invention.

Les variables booléennes simples se décomposent en quatre groupes différents.

Un premier groupe 94 est constitué des variables d'entrée et de sortie représentant respectivement les valeurs des états des cartes de circuits capteurs et les valeurs des états déterminés par le programme d'application lancé sur l'automate et transmises périodiquement aux cartes de circuits actionneurs. Ces variables d'entrée et de sortie sont de type booléen.

Un second groupe 95 est constitué des variables mémoires de type booléen. Ces variables mémoires comprennent notamment des bits auxiliaires initialisés à l'état de référence avant toute première exécution du programme d'application; des relais mémorisés dont l'état est modifié uniquement par le programme d'application ou par des ordres manuels et des états d'étapes des structures séquentielles dont l'état est modifié par le programme d'application ou par des ordres contrôlés par le biais de boîtes fonctionnelles.

Un troisième groupe 96 est constitué des variables fronts obtenues au niveau des programmes d'application à partir des variables d'entrée, en utilisant des variables bits auxiliaires. Le client crée ses variables fronts dans l'entité déclaration. On distingue les variables fronts montants et fronts descendants.

Un quatrième groupe 98 est constitué par des variables d'état et des indicateurs de l'automate dont le rôle est de pouvoir prendre en compte l'état de l'automate dans les programmes d'application. Ces variables sont de deux types à savoir les variables qui indiquent l'état réel de l'automate et les variables qui permettent au programme d'application de demander les changements de l'état de l'automate.

Les variables numériques simples se décomposent en trois groupes différents.

Un premier groupe 100 comprend les nombres entiers non signés de 16 à 32 bits en numération hexadécimale. L'identificateur constructeur est par exemple %HW n (16 bits) ou %HD n (32 bits) où n est le numéro d'ordre entier non signé en numération décimale.

Un second groupe 102 comprend les nombres entiers signés de format 16 ou 32 bits écrits en numération décimale. L'identificateur constructeur est par exemple %MW n (16 bits) ou %MD n (32 bits).

Un troisième groupe 104 comprend les nombres réels signés de format 32 bits écrits en numération décimale. L'identificateur constructeur est par exemple %FD n.

Sur la figure 15 on a représenté sous la forme d'un tableau récapitulatif les structures simples (booléennes, numériques et textuelles) utilisées dans l'automate programmable selon l'invention.

Les structures simples de données sont des collections ordonnées de variables simples décrites ci-avant. Il existe des structures booléennes, numériques et textuelles. Les structures booléennes sont de deux types : table 106 et tableau 108. Les tables regroupent les variables booléennes en colonnes de k éléments avec k chiffre entier tandis que les tableaux regroupent les variables booléennes en ligne et colonne de K x 1 éléments avec 1 chiffre entier.

L'identificateur constructeur de l'élément du tableau numéro 2 correspondant au relais mémorisé de la cinquième ligne et de la quatrième colonne est par exemple %RX 2 (5,4).

Les structures numériques sont de trois types : pile 110, table 112 et tableau 114. Les piles regroupent les variables numériques de 16 bits sous la forme d'une pile LIFO ou FIFO de k éléments. Les tables regroupent les variables numériques de 16 ou 32 bits en colonne de k éléments tandis que les tableaux regroupent les variables numériques de 16 ou 32 bits en ligne et en colonne de k x 1 éléments.

L'identificateur constructeur d'une pile est par exemple %MW n ().

Les structures textuelles comprennent des chaînes de caractères 116 regroupant des mots de 8 bits. L'identificateur constructeur d'une chaîne de caractères est par exemple %CC n ().

Par ailleurs, il existe des données à part que l'on associe au temps. Ces données représentent notamment la notion de durée permettant de contrôler le temps écoulé et de valider des traitements à période définie par l'utilisateur et la notion de date et d'heure du jour pour synchroniser le début ou la fin de traitement dans une référence absolue de temps.

Enfin l'automate programmable utilise les données opératoires permettant de construire des expressions combinatoires. En pratique, l'automate programmable selon l'invention utilise des opérations logiques tel que le ET logique, le OU logique, la mise en facteur, l'affectation, le saut, la négation. Il utilise aussi des fonctions standards ou boîtes fonctionnelles constructeur et des fonctions spécifiques ou boîtes fonctionnelles utilisateur.

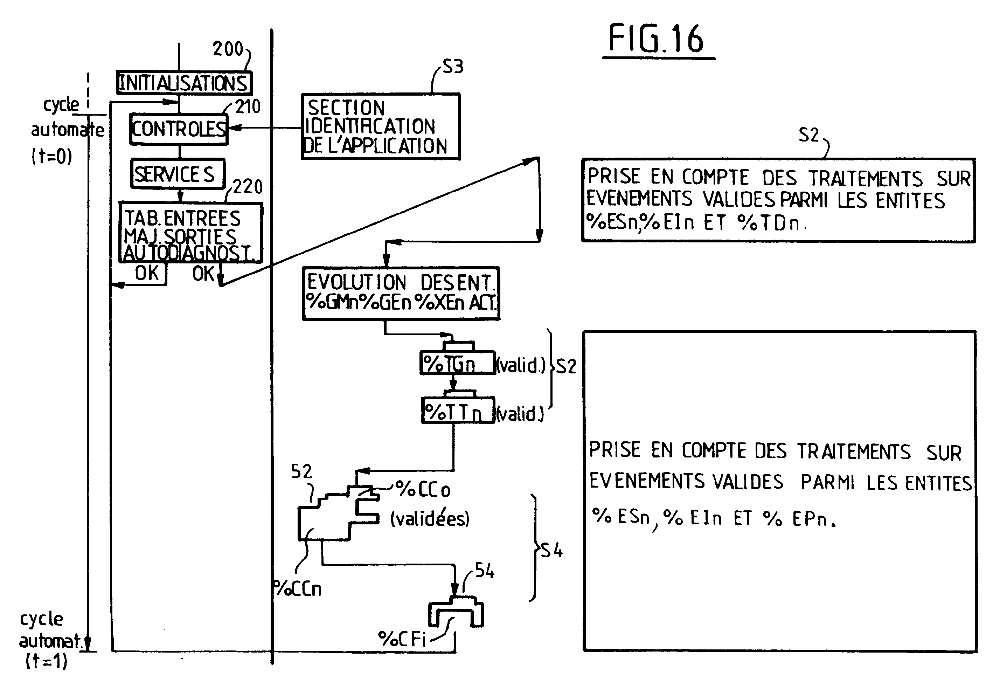

Le fonctionnement de l'automate programmable décrit en référence aux figures 1 à 15 est illustré sur la figure 16.

Le moniteur automate exécute à chaque cycle de T=0 à T=1 d'une part une vérification de l'état des cartes d'interface de l'application (initialisation 200 et contrôles 210) en fonction des entités de la troisième section (section identification S3).

D'autre part le moniteur exécute à chaque cycle, après acquisition de la table des entrées et des valeurs précédentes des sorties 220, d'un côté, en priorité, une prise en compte des traitements pouvant résulter d'entités évènements validés de la seconde section S2. De l'autre côté, le moniteur exécute les traitements résultant d'entités de la première section S1 en cours de validité, notamment les entités de traitement de dépendance de graphes et les entités de traitement de tâches. Puis l'automate programmable exécute les traitements résultant d'entités de la quatrième section S4 en cours de validité, notamment les entités combinatoires cycliques et les entités combinatoires de fond 54. Le lancement d'une application ainsi définie par les différentes sections est effectué à partir de l'entité mise sous tension de la seconde section après exécution éventuelle de l'entité présence diagnostic (autodiagnostic 220).

Les applications de régulation et de trajectoire d'axes peuvent être lancées en parallèle aux opérations cycliques en sélectionnant la cinquième section de régulation ou la sixième section de trajectoire d'axes.

L'automate programmable par langage structuré selon l'invention permet d'atteindre les buts visés ci-avant à savoir :
- transcription directe et parfaite du GRAFCET d'une application d'automatisme à l'aide des entités graphes et des entités de traitement de graphes 34 de la première section S1;
- organisation structurelle et fonctionnelle ainsi que modularité des programmes d'application à l'aide notamment des entités d'évènements de la deuxième section S2 et des entités combinatoires de la quatrième section S4 ainsi que celles de la première section S1;
- détection et diagnostic des pannes à l'aide notamment des entités d'évènements de la seconde section S2;
- création de fonctions spécifiques à l'aide des boîtes fonctionnelles constructeur et utilisateur; et
- contrôle d'accès aux programmes et aux données, modification en temps réel des programmes, élaboration de dossiers d'information à l'aide notamment des entités de la troisième section S3.

## Revendications

1. Automate programmable, du type comprenant :
- des moyens d'interface d'entrée (2) avec des cartes de circuits capteurs (4),
- des moyens d'interface de sortie (16) avec des cartes de circuits actionneurs (18),
- des moyens d'interface de communication (17) avec des systèmes programmés (19) comprenant d'autres automates programmables,
- des moyens de traitement (8) comprenant un moniteur (10) ainsi qu'une mémoire (14) propre à contenir des valeurs actuelles des états d'entrée et des valeurs précédentes des états de sortie, stockées à chaque cycle sous le contrôle du moniteur (10), et des lois de mise à jour des états de sortie en fonction de ces valeurs et
- des moyens d'interface utilisateur (20) pour la programmation et la modification desdites lois,
caractérisé en ce que ladite mémoire (14) est au moins en partie structurée en sections constituées chacune d'entités programmables et modifiables par l'interface utilisateur, l'utilisateur sélectionnant au moins :
- une première section (S1) comprenant d'une part, des entités graphes maîtres (24), des entités graphes esclaves (26) subordonnées chacune à au moins un graphe maître, et des entités macro-étapes, ces entités graphes et macro-étapes étant essentiellement les seules à offrir des lois de mise à jour séquentielles à l'aide d'étapes (30) et de transitions entre étapes (32),
. d'autre part, des entités de traitement de graphes (34) propres à gérer la dépendance entre graphes maîtres et graphes esclaves, des entités de traitement de tâches (36) propres à effectuer des traitements validés par les étapes de graphes, maîtres ou esclaves, ou de macro-étapes, et des entités de traitement de réceptivité (40) propres à valider les transitions des graphes, maîtres ou esclaves, ou des macro-étapes, les entités graphes et macro-étapes étant chacune susceptibles de prendre l'un des quatre états fonctionnels possibles :
. un état actif (60) dans lequel les lois de mise à jour séquentielles relatives à une entité graphe sont exécutées normalement;
. un état inactif (62) dans lequel les lois de mise à jour séquentielles relatives à une entité graphe ne sont pas exécutées;
. un état gelé actif (66) dans lequel les lois de mise à jour séquentielles relatives à une entité graphe ne peuvent évoluer, dans lequel les étapes associées à ladite entité graphe conservent leur état précédent et dans lequel les entités de traitement associées aux étapes actives de ladite entité graphes sont exécutées;
. un état gelé inactif (64) dans lequel les lois de mise à jour séquentielles relatives à l'entité graphe ne peuvent évoluer, dans lequel les étapes associées à ladite entité graphe conservent leur état précédent et dans lequel les entités de traitement associées aux étapes actives de ladite entité graphe ne sont pas exécutées, l'ensemble des entités de cette première section définissant l'intégralité des graphes requis pour une application particulière de l'automate;
- une seconde section (S2) comprenant une liste d'entités d'évènements rangées par priorité décroissante comprenant d'abord des évènements système (41) de priorité maximale dont dans l'ordre la mise hors tension de l'automate, la présence de diagnostics, et la mise sous tension de l'automate, puis des évènements interface (43) de priorité seconde relatifs aux états des cartes d'interface de l'application et enfin des évènements programmés (45) de priorité tierce, définis à l'aide de code exécutable, et comportant en particulier des ordres destinés aux entités de graphes de la première section;
- une troisième section (S3) comprenant une entité désignant globalement l'application (44), une entité définissant les déclarations de données (48) utiles à celle-ci, et une entité configuration (50) définissant les cartes d'interface nécessaires à l'application, ainsi qu'au moins un état admissible de chacune desdites cartes d'interface de l'application pour le fonctionnement normal de l'automate;
- une quatrième section (S4) comprenant des entités combinatoires cycliques (52) et des entités combinatoires de fond (54), ces entités offrant des lois de mise à jour essentiellement combinatoires à l'aide au moins d'expressions combinatoires et des boîtes fonctionnelles, les entités combinatoires cycliques étant susceptibles lorsqu'elles sont validées d'être exécutées totalement et consécutivement, tandis que les entités combinatoires de fond étant susceptibles lorsqu'elles sont validées d'être exécutées au moins partiellement à raison d'au plus une à chaque cycle, et
en ce que le moniteur (10) exécute à chaque cycle d'une part, une vérification de l'état des cartes d'interface de l'application en fonction des entités de la troisième section (S3), d'autre part, après acquisition de la table des entrées et des valeurs précédentes des sorties, d'un côté, en priorité, une prise en compte des traitements pouvant résulter d'entités évènements validées de la seconde section (S2), de l'autre, les traitements résultant d'entités de la première section (S1) en cours de validité, puis des traitements résultant d'entités de la quatrième section (S4) en cours de validité, ce qui permet le lancement d'une application ainsi définie à partir de l'entité mise sous tension de la seconde section (S2) après exécution éventuelle de l'entité présence diagnostics.

2. Automate programmable selon la revendication 1, caractérisé en ce qu'il comprend en outre :
- des moyens d'interface de régulation avec des cartes de circuits de régulation;
- des moyens de traitement supplémentaires propres à traiter les informations de régulation provenant desdits circuits de régulation;
en ce que l'utilisateur sélectionne en outre une cinquième section (S5) comprenant des entités de régulation et des boîtes fonctionnelles de régulation offrant des lois de fonctionnement de régulation à l'aide d'au moins une boucle de régulation; et en ce que les moyens de traitement supplémentaires exécutent en parallèle au cycle automate une application de régulation définie en fonction des entités et boîtes fonctionnelles de régulation.

3. Automate programmable selon la revendication 1, caractérisé en ce qu'il comprend en outre :
- des moyens d'interface d'axes avec des cartes de circuits de trajectoires d'axes;
- des moyens de traitement supplémentaires propres à traiter les informations de trajectoires d'axes provenant desdits circuits de trajectoires d'axes;
en ce que l'utilisateur sélectionne en outre une sixième section (S6) comprenant des entités trajectoires d'axes offrant des lois de fonctionnement de déplacement à l'aide d'au moins un module d'asservissement d'axes en vitesse et en position; et en ce que les moyens de traitement supplémentaires exécutent en parallèle au cycle automate une application de déplacement d'axes définie en fonction des entités trajectoires d'axes et des boîtes fonctionnelles d'axes.

4. Automate programmable selon les revendications 1 à 3, caractérisé en ce que les boîtes fonctionnelles comprennent des boîtes fonctionnelles constructeur propres à réaliser des fonctions standards constructeur dont les caractéristiques sont modifiables et programmables par ledit constructeur et des boites fonctionnelles utilisateur propres à réaliser des fonctions spécifiques utilisateur dont les caractéristiques sont modifiables et programmables par ledit utilisateur.

5. Automate programmable selon l'une quelconque des revendications 1 à 3, caractérisé en ce que chaque entité comprend au moins :
- un module "en-tête" regroupant les informations relatives à l'identification et à la validation de ladite entité; et
- un module "corps" regroupant les informations relatives au fonctionnement de l'automatisme associé à ladite entité.

6. Automate programmable selon la revendication 5, caractérisé en ce que chaque entité comprend en outre :
- un module "commentaire" décrivant textuellement l'automatisme associé à ladite entité.

7. Automate programmable selon la revendication 5 ou la revendication 6, caractérisé en ce que chaque entité de la première, seconde, quatrième et cinquième sections comprend en outre :
- un module "bloc de constantes locales" regroupant les informations relatives aux constantes utilisables exclusivement dans ladite entité.

8. Automate programmable selon la revendication 5, caractérisé en ce que le module "en-tête" de chaque entité comprend une donnée identificateur constructeur (59) propre à individualiser ladite entité par le constructeur.

9. Automate programmable selon la revendication 8, caractérisé en ce que le module "en-tête" de chaque entité comprend une donnée identificateur utilisateur (61) propre à identifier symboliquement ladite entité par l'utilisateur.

10. Automate programmable selon les revendications 8 et 9, caractérisé en ce que chaque donnée identificateur constructeur (59) comprend un préfixe d'au moins deux caractères alphabétiques précédé du caractère % et un numéro d'ordre.

11. Automate programmable selon la revendication 5, caractérisé en ce que les informations relatives à la validation de chaque entité de graphes de la première section (S1) comprennent une donnée (60, 62, 64, 66) représentant l'état fonctionnel de ladite entité, une donnée (68) représentant la durée maximale de l'entité à l'état actif, une donnée (70) représentant le numéro d'ordre de l'étape présentant une durée d'activité différente de la durée d'activité définie par l'utilisateur pour ladite étape.

12. Automate programmable selon la revendication 5, caractérisé en ce que les informations relatives à la validation de chaque entité de traitement de la première section et de chaque entité des deuxième, quatrième et cinquième sections comprennent :
- une donnée (78) représentant l'état de validation de ladite entité, une donnée (71) représentant la durée maximale d'exécution et des données (73, 76) représentant des points d'entrée de validation auxquels est connectée la loi de validation résultant de la programmation.

13. Automate programmable selon la revendication 1, caractérisé en ce que l'entité désignant globalement l'application comprend une entité "identité" (44) regroupant les informations propres à identifier le programme de l'application ainsi que des données "clés d'accès" propres à autoriser l'accès au programme et aux données.

14. Automate programmable selon la revendication 13, caractérisé en ce que l'entité "identité" (44) comprend au moins :
- une donnée nom du projet,
- une donnée code du programme,
- une donnée numéro de la version du programme,
- une donnée type d'automate,
- une donnée nom du responsable du projet, et
- une donnée date de création du projet.

15. Automate programmable selon la revendication 13, caractérisé en ce que les données "clés d'accès" comprennent au moins,
- une donnée "clé de modification en ligne" propre à autoriser toutes les fonctions y compris la modification du programme automate en fonctionnement,
- une donnée "clé d'accès concepteur" propre à autoriser toutes les fonctions sauf la modification en ligne du programme,
- une donnée "clé d'accès exploitant" propre à autoriser toutes les fonctions sauf la modification en ligne, le chargement de programme dans l'automate, le forçage des entrées et sorties, et la modification des données protégées,
- une donnée "clé de forçage" propre à autoriser avec la clé d'accès exploitant le forçage des variables d'entrée et de sortie,
- et une donnée "clé de modification des données protégées", propre à autoriser avec la clé d'accès exploitant la modification desdites données.

16. Automate programmable selon la revendication 4, caractérisé en ce que les boîtes fonctionnelles comprennent au moins :
- une donnée nom représentant le code de la boîte,
- une donnée condition (76) représentant la condition d'entrée nécessaire à la validation de l'exécution de la fonction associée à ladite boîte, et
- des données paramètres représentant des paramètres d'entrée internes et de sortie de ladite boîte.

17. Automate programmable selon la revendication 5, caractérisé en ce que chaque entité possède au moins une représentation graphique décrivant graphiquement le fonctionnement de l'application associée à ladite entité et une représentation textuelle décrivant textuellement le fonctionnement de l'application associée à ladite entité.

18. Automate programmable selon la revendication 1, caractérisé en ce que le code généré traite des données booléennes, numériques et alphabétiques.

## Patentansprüche

1. Programmierbarer Automat des Typs, welcher umfaßt:
- Eingangsschnittstellenvorrichtungen (2) mit Wandlerschaltkreiskarten (4),
- Ausgangsschnittstellenvorrichtungen (16) mit Stellgliedschaltkreiskarten (18),
- Kommunikationsschnittstellenvorrichtungen (17) mit programmierten Systemen (19), die weitere programmierbare Automaten umfassen,
- Bearbeitungsvorrichtungen (8), die einen Monitor (10) ebenso wie einen Speicher (14) umfassen, der geeignet ist, aktuelle Werte der Eingangszustände und den Ausgangszuständen vorausgehenden Werte, die bei jedem Zyklus unter der Kontrolle des Monitors (10) gespeichert werden, und Regeln zum Hervorbringen der Ausgangszustände in Abhängigkeit von diesen Werten zu enthalten, und
- Benutzerschnittstellenvorrichtungen (20) zum Programmieren und zur Modifikation dieser Regeln,
durch gekennzeichnet, daß der Speicher (14) wenigstens teilweise in Abschnitte unterteilt ist, die jeweils aus durch die Benutzerschnittstelle programmierbaren und modifizierbaren Einheiten bestehen, wobei der Benutzer wenigstens auswählt:
- einen ersten Abschnitt (S1), der auf der einen Seite umfaßt: Hauptgrapheneinheiten (24), Untergrapheneinheiten (26), die jeweils einer Hauptgrapheneinheit untergeordnet sind, und Makroschritteinheiten, wobei diese Graphen- und Makroschritteinheiten im wesentlichen die einzigen sind, die sequentielle Regeln zum Auf-den-neuesten-Stand-bringen mit Hilfe von Schritten (30) und von Übergängen zwischen Schritten (32) bieten,
. und auf der anderen Seite umfaßt: Graphen-Verarbeitungseinheiten (34), die geeignet sind, die Abhängigkeit zwischen den Hauptgrapheneinheiten und Untergrapheneinheiten zu behandeln, Einheiten zum Bearbeiten von Aufgaben (36), die geeignet sind, von den Haupt- oder Untergrapheneinheiten bestätigte Bearbeitungen oder Makroschritte durchzuführen, und Empfangsverarbeitungseinheiten (40), die geeignet sind, die Haupt- oder Untergraphenübergänge oder die Makroschrittübergänge zu bestätigen, wobei die Graphen- und Makroschritteinheiten jeweils geeignet sind, einen der vier möglichen Funktionszustände einzunehmen:
. einen aktiven Zustand (60), in dem die sequentiellen Regeln zum Auf-den-neuesten-Stand-bringen bezüglich einer Grapheneinheit normal ausgeführt werden,
. einen nicht-aktiven Zustand (62), in dem die sequentiellen Regeln zum Auf-den-neuesten-Stand-bringen bezüglich einer Grapheneinheit nicht ausgeführt werden,
. einen aktiven, eingefrorenen Zustand (66), in dem die sequentiellen Regeln zum Auf-den-neuesten-Stand-bringen bezüglich einer Grapheneinheit sich nicht entwickeln können, in dem die mit der besagten Grapheneinheit verbundenen Schritte ihren vorhergehenden Zustand beibehalten und in dem die mit den aktiven Schritten der besagten Grapheneinheit verbundenen Bearbeitungseinheiten ausgeführt werden;
. einen nicht-aktiven, eingefrorenen Zustand (64), in dem die sequentiellen Regeln zum Auf-den-neuesten-Stand-bringen bezüglich einer Grapheneinheit sich nicht entwickeln können, in dem die mit der besagten Grapheneinheit verbundenen Schritte ihren vorhergehenden Zustand beibehalten und in dem die mit den aktiven Schritten der besagten Grapheneinheit verbundenen Bearbeitungseinheiten nicht ausgeführt werden, wobei die Gesamtheit der Einheiten dieses ersten Abschnitts die Gesamtheit der Graphen bildet, die für eine bestimmte Anwendung des Automaten erforderlich sind;
- einen zweiten Abschnitt (S2), der umfaßt: eine Liste von Ereigniseinheiten, die nach abnehmender Priorität geordnet sind und zunächst Systemereignisse (41) maximaler Priorität, unter diesen der Reihe nach, das Spannungabschalten des Automaten, die Anwesenheit von Diagnose und das Spannungsanschalten des Automaten, dann Schnittstellenereignisse (43) mit sekundärer Priorität bezüglich der Zustände der Anwendungsschnittstellenkarten und schließlich programmierte Ereignisse (45) mit tertiärer Priorität umfassen, welche mittels eines ausführbaren Codes definiert sind und im wesentlichen Anweisungen umfassen, die für die Grapheneinheiten des ersten Abschnitts bestimmt sind;
- einen dritten Abschnitt (S3), der umfaßt: eine Einheit, die global die Anwendung (44) bezeichnet, eine Einheit, die die Deklaration von für diese nützlichen Daten (48) definiert, und eine Konfigurationseinheit (50), die die für die Anwendung notwendigen Schnittstellenkarten ebenso wie wenigsten einen zulässigen Zustand für jede der Schnittstellenkarten für die Anwendung für das normale Funktionieren des Automats definiert;
- einen vierten Abschnitt (S4), der zyklische Kombinationseinheiten (52) und Grundkombinationseinheiten (54) umfaßt, wobei diese Einheiten im wesentlichen kombinatorische Regeln zum Auf-den-neuesten-Stand-bringen mit Hilfe von wenigstens kombinatorischen Ausdrücken und Funktionskästen bieten, wobei die zyklischen Kombinationseinheiten geeignet sind, wenn sie bestätigt sind, insgesamt und der Reihe nach durchgeführt zu werden, wohingegen die Grundkombinationseinheiten geeignet sind, wenn sie bestätigt sind, wenigstens teilweise mit höchstens einem pro Zyklus durchgeführt zu werden, und
dadurch daß der Monitor (10) bei jedem Zyklus auf der einen Seite eine Bestätigung des Zustands der Anwendungsschnittstellenkarten in Abhängigkeit von den Einheiten des dritten Abschnitts (S3) durchführt und auf der anderen Seite nach dem Erhalt der Eingangstabelle und der vorhergehenden Ausgangswerte einerseits mit Priorität eine Berücksichtigung der Bearbeitungen, die aus bestätigten Ereigniseinheiten des zweiten Abschnitts (S2) herrühren können, und andererseits die Bearbeitungen, die von den Einheiten des ersten Abschnitts (S1) im Verlaufe der Bestätigung herrühren, und dann die Bearbeitungen, die von den Einheiten des vierten Abschnitts (S4) im Verlaufe der Bestätigung herrühren, ausführt, was das Starten einer derart definierten Anwendung ausgehend von der unter Spannung gesetzten Einheit des zweiten Abschnitts (S2) nach eventueller Durchführung der anwesenden Diagnoseeinheit ermöglicht.

2. Programmierbarer Automat nach Anspruch 1, dadurch gekennzeichnet, daß er außerdem aufweist:
- Regulationsschnittstellenvorrichtungen mit Regulationsschaltkreiskarten;
- zusätzliche Bearbeitungsvorrichtungen, die geeignet sind, die Regulationsinformationen zu bearbeiten, die von diesen Regulationsschaltkreisen kommen;
daß der Benutzer außerdem einen fünften beschnitt (S5) auswählt, der Regulationseinheiten und Regulationsfunktionskästen, die Regulationsfunktionsregeln mit Hilfe wenigstens einer Regulationsschleife bieten, umfaßt; und daß die zusätzlichen Bearbeitungsvorrichtungen parallel zum Automatenzyklus eine Regulationsanwendung durchführen, die als Funktion der Regulationseinheiten und -funktionskästen definiert ist.

3. Programmierbarer Automat nach Anspruch 1, dadurch gekennzeichnet, daß er außerdem umfaßt:
- Achsenschnittstellenvorrichtungen mit Schaltkreiskarten für Achsentrajektorien;
- zusätzliche Bearbeitungsvorrichtungen, die geeignet sind, die Achsentrajektorieninformation, die von den Schaltkreisen für Achsentrajektorien kommen, zu bearbeiten;
daß der Benutzer außerdem einen sechsten beschnitt (S6) auswählt, der Achsentrajektorieneinheiten umfaßt, die Bewegungsfunktionsregeln mit Hilfe wenigstens eines Steuerungsmoduls für Achsengeschwindigkeit und -position bieten; und daß die zusätzlichen Bearbeitungsvorrichtungen parallel zum Automatenzyklus eine Achsenbewegungsanwendung durchführen, die als Funktion der Achsentrajektorieneinheiten und der Achsenfunktionskästen definiert ist.

4. Programmierbarer Automat nach den Ansprüchen 1 bis 3, dadurch gekennzeichnet, daß die Funktionskästen Konstrukteur-Funktionskästen, die geeignet sind, Konstrukteur-Standardfunktionen zu realisieren, deren Eigenschaften durch den Konstrukteur modifizierbar und programmierbar sind, und Benutzer-Funktionskästen, die geeignet sind, Benutzer-Standardfunktionen zu realisieren, deren Eigenschaften durch den Benutzer modifizierbar und programmierbar sind, umfassen.

5. Programmierbarer Automat nach einem der Ansprüche 1 bis 3, dadurch gekennzeichnet, daß jede Einheit mindestens umfaßt:
- einen "Kopf"-modul, der die Informationen bezüglich der Identifikation und Bestätigung der besagten Einheit ordnet; und
- einen "Körper"-modul, der die Informationen bezüglich des Funktionierens des mit der besagten Einheit verbundenen Automatismus ordnet.

6. Programmierbarer Automat nach Anspruch 5, dadurch gekennzeichnet, daß jede Einheit außerdem umfaßt:
- einen "Kommentar"-modul, der textmäßig den mit der Einheit verbundenen Automatismus beschreibt.

7. Programmierbarer Automat nach Anspruch 5 oder nach Anspruch 6, dadurch gekennzeichnet, daß jede Einheit des ersten, zweiten, dritten, vierten und fünften Abschnitts außerdem umfaßt:
- einen "Block-lokaler-Konstanten"-Modul, der die Informationen bezüglich ausschließlich in der besagten Einheit verwendbarer Konstanten ordnet.

8. Programmierbarer Automat nach Anspruch 5, dadurch gekennzeichnet, daß der "Kopf"-modul jeder Einheit eine Konstrukteur-Identifikationsdateneinheit (59) umfaßt, die geeignet ist, die Einheit durch den Konstrukteur zu individualisieren.

9. Programmierbarer Automat nach Anspruch 8, dadurch gekennzeichnet, daß der "Kopf"-modul jeder Einheit eine Benutzer-Identifikationsdateneinheit (61) umfaßt, die geeignet ist, die Einheit durch den Benutzer symbolisch zu identifizieren.

10. Programmierbarer Automat nach den Ansprüchen 8 und 9, dadurch gekennzeichnet, daß jede Konstrukteur-Identifikationsdateneinheit (59) ein Präfix von wenigstens zwei alphabetischen Zeichen umfaßt, dem das Zeichen % oder eine Ordnungszahl vorangeht.

11. Programmierbarer Automat nach Anspruch 5, dadurch gekennzeichnet, daß die Informationen bezüglich der Bestätigung jeder Grapheneinheit des ersten Abschnitts (S1) eine Dateneinheit (60, 62, 64, 66), die den funktionellen Zustand der Einheit angibt, eine Dateneinheit (68), die die maximale Dauer der Einheit im aktiven Zustand, und eine Dateneinheit (70) umfassen, die die Ordnungszahl des Schrittes angibt, der eine von der Aktivitätsdauer, die von dem Benutzer für den Schritt definiert wird, unterschiedliche Aktivitätsdauer besitzt.

12. Programmierbarer Automat nach Anspruch 5, dadurch gekennzeichnet, daß die Informationen bezüglich der Bestätigung jeder Bearbeitungseinheit des ersten Abschnitts und jeder Bearbeitungseinheit des zweiten, vierten und fünften Abschnitts umfassen:
- eine Dateneinheit (78), die den Bestätigungszustand der Einheit angibt, eine Dateneinheit (71), die die maximale Durchführungsdauer angibt, und Daten (73, 76), die die Bestätigungseintrittspunkte angeben, mit denen die aus der Programmierung resultierende Bestätigungsregel verbunden ist.

13. Programmierbarer Automat nach Anspruch 1, dadurch gekennzeichnet, daß die Einheit, die die Anwendung global bezeichnet, einen "Identitäts"-einheit (44), die die Informationen ordnet, die geeignet sind, das Anwendungsprogramm zu identifizieren, ebenso wie "Zugriffsschlüssel"-daten umfaßt, die geeignet sind, den Zugriff zu dem Programm und zu den Daten zu autorisieren.

14. Programmierbarer Automat nach Anspruch 13, dadurch gekennzeichnet, daß die "Identitäts"-einheit (44) zumindest umfaßt:
- eine Dateneinheit mit dem Projektnamen,
- eine Dateneinheit mit dem Programmcode,
- eine Dateneinheit mit der Nummer der Programmversion,
- einen Dateneinheit mit dem Automatentyp,
- einen Dateneinheit mit dem Namen des Projektverantwortlichen, und
- einen Dateneinheit mit dem Datum der Projekterstellung.

15. Programmierbarer Automat nach Anspruch 13, dadurch gekennzeichnet, daß die "Zugriffsschlüssel"-daten zumindest umfassen:
- eine "Zeilenmodifikationsschlüssel"-dateneinheit, die geeignet ist, alle Funktionen zu autorisieren, einschließlich des im Betrieb befindlichen Automatenprogramms,
- eine "Konzeptzugriffsschlüssel"-dateneinheit, die geeignet ist alle Funktionen zu autorisieren, außer der Zeilenmodifikation des Programms,
- eine "Auswertezugriffsschlüssel"-dateneinheit, die geeignet ist alle Funktionen zu autorisieren, außer der Zeilenmodifikation des Programms, des Ladens des Programms in den Automaten, des Formens der Eingänge und Ausgänge und der Modifikation der geschützten Daten,
- eine "Formschlüssel"-dateneinheit, die geeignet ist, zusammen mit dem Auswertezugriffsschlüssel, das Formen der Eingangs- und Ausgangsvariablen zu autorisieren,
- und eine "Modifikation-der-geschützten-Daten"-Daten-einheit, die geeignet ist, zusammen mit dem Auswertezugriffsschlüssel die Modifikation der besagten Daten zu autorisieren.

16. Programmierbarer Automat nach Anspruch 4, dadurch gekennzeichnet, daß die Funktionskästen zumindest umfassen:
- eine Namensdateneinheit, die den Code des Kastens angibt,
- eine Zustandsdateneinheit (76), die den Eingangszustand angibt, der notwendig ist zur Bestätigung der Ausführung der mit dem Kasten verbundenen Funktion, und
- parametrische Daten, die die internen Eingangs- und Ausgangsparameter des Kastens angeben.

17. Programmierbarer Automat nach Anspruch 5, dadurch gekennzeichnet, daß jede Einheit wenigstens eine graphische Darstellung besitzt, die graphisch das Funktionieren der mit der besagten Einheit verbundenen Anwendung beschreibt, und eine textliche Darstellung besitzt, die textlich das Funktionieren der mit der besagten Einheit verbundenen Anwendung beschreibt.

18. Programmierbarer Automat nach Anspruch 1, dadurch gekennzeichnet, daß der erzeugte Code boolsche, numerische und alphabetische Daten bearbeitet.

## Claims

1. Programmable automaton of the type comprising:
- input interface means (2) with sensor circuit boards (4),
- output interface means (16) with actuator circuit boards (18),
- interface means (17) for communication with programmed systems (19) comprising other programmable automatons,
- processing means (8) comprising a monitor (10) as well as a memory (14) capable of containing current values of the input states and previous values of the output states stored during each cycle under the control of the monitor (10), and rules for updating the output states as a function of these values and
- user interface means (20) for programming and modifying said rules,
characterised in that said memory (14) is structured at least in part in sections each consisting of entities which may be programmed and modified by the user interface, the user selecting at least:
- a first section (S1) comprising on the one hand master graph entities (24), slave graph entities (26) each subordinated to at least one master graph, and macro-stage entities, these graph and macro-stage entities essentially being the only ones to offer rules for sequential updating by means of stages (30) and transitions between stages (32), on the other hand graph processing entities (34) capable of managing the dependence between master graphs and slave graphs, task processing entities (36) capable of carrying out processes which is validated by the master or slave graph stages or macro stages, and receptivity processing entities (40) capable of validating the transitions of master or slave graphs or macro stages, graph and macro stage entities each being capable of assuming one of the four possible functional states:
. an active state (60) in which the sequential updating rules relating to a graph entity are carried out normally;
. an inactive state (62) in which the sequential updating rules relating to a graph entity are not carried out;
. an active frozen state (66) in which the sequential updating rules relating to a graph entity cannot evolve, in which the stages associated with said graph entity maintain their previous state and in which the processing entities associated with the active stages of said graph entity are carried out;
. an inactive frozen state (64) in which the sequential updating rules relating to the graph entity cannot evolve, in which the stages associated with said graph entity maintain their previous state and in which the processing entities associated with the active stages of said graph entity are not carried out, all the entities of this first section defining the completeness of the graphs required for a particular application of the automaton;
- a second section (S2) comprising a list of entities of events ranked by decreasing priority comprising firstly maximum priority system events (41) including, in order, powering down of the automaton, the presence of diagnostics and powering up of the automaton, then the second priority interface events (43) relating to the states of the application interface boards and finally third priority programmed events (45) defined by means of an executable code and comprising, in particular, instructions intended for the graph entities of the first section;
- a third section (S3) comprising an entity totally designating the application (44), an entity defining the useful data statements (48) thereof, and a configuration entity (50) defining the interface boards required for the application, as well as at least one allowable state of each of said interface boards for the application for normal operation of the automaton;
- a fourth section (S4) comprising cyclic combinational entities (52) and basic combinational entities (54), these entities offering essentially combinational updating rules by means of at least combinational expressions and functional boxes, the cyclic combinational entities being capable of being carried out totally and consecutively when they are validated whereas the basic combinational entities are capable of being carried out at least partially in a proportion of at most one for each cycle, when validated, and
in that, during each cycle, the monitor (10) carries out, on the one hand, a verification of the state of the application interface boards as a function of the entities of the third section (S3), on the other hand, after acquisition of the table of inputs and previous values of the outputs, on the one hand as a priority, detection of processing possibly resulting from validated event entities from the second section (S2) and on the other hand processing resulting from entities of the first section (SI), which are currently valid, then processing resulting from entities of the fourth section (S4), which are currently valid, allowing the launching of an application defined in this way from the powered up entity of the second section (S2) after possible execution of the entity of diagnostics presence.

2. Programmable automaton according to claim 1, characterised in that it also comprises:
- control interface means with control circuit boards;
- additional processing means capable of processing the control information originating from said control circuits;
in that the user also selects a fifth section (S5) comprising control entities and control functional boxes offering rules of operation of control by means of at least one control loop; and in that the additional processing means carry out, in parallel with the automaton cycle, a control application defined as a function of the control entities and functional boxes.

3. Programmable automaton according to claim 1, characterised in that it also comprises:
- axis interface means with axis trajectory circuit boards;
- additional processing means capable of processing the axis trajectory information originating from said axis trajectory circuits;
in that the user also selects a sixth section (S6) comprising axis trajectory entities offering rules of operation of displacement by means of at least one module for the feedback of axes in speed and position; and in that the additional processing means carry out, in parallel with the automaton cycle, an axis displacement application defined as a function of the trajectory entities of axes and the functional boxes of axes.

4. Programmable automaton according to claims 1 to 3, characterised in that the functional boxes comprise manufacturer functional boxes capable of carrying out standard manufacturer functions of which the characteristics may be modified and programmed by said manufacturer and user functional boxes capable of carrying out specific user functions of which the characteristics may be modified and programmed by said user.

5. Programmable automaton according to any one of claims 1 to 3, characterised in that each entity comprises at least:
- a "header" module collecting information relating to the identification and validation of said entity; and
- a "body" module collecting information relating to the operation of process control associated with said entity.

6. Programmable automaton according to claim 5, characterised in that each entity also comprises:
- a "narrative" module textually describing the process control associated with said entity.

7. Programmable automaton according to claim 5 or claim 6, characterised in that each entity of the first, second, fourth and fifth sections also comprises:
- a "block of local constants" module collecting information relating to the constants which may be used exclusively in said entity.

8. Programmable automaton according to claim 5, characterised in that the "header" module of each entity comprises a manufacturer identification datum (59) capable of individualising said entity by the manufacturer.

9. Programmable automaton according to claim 8, characterised in that the "header" module of each entity comprises a user identification datum (61) capable of identifying said entity symbolically by the user.

10. Programmable automaton according to claims 8 and 9, characterised in that each manufacturer identification datum (59) comprises a prefix of at least two alphabetic characters preceded by the character % and a serial number.

11. Programmable automaton according to claim 5, characterised in that the information relating to the validation of each entity of graphs of the first section (S1) comprises a datum (60, 62, 64, 66) representing the functional state of said entity, a datum (68) representing the maximum duration of the entity in the active state, a datum (70) representing the serial number of the stage having a duration of activity which is different from the duration of activity defined by the user for said stage.

12. Programmable automaton according to claim 5, characterised in that the information relating to the validation of each processing entity of the first section and each entity of the second, fourth and fifth sections comprises:
- a datum (78) representing the state of validation of said entity, a datum (71) representing the maximum duration of execution and data (73, 76) representing validation input points to which the validation rule resulting from programming is connected.

13. Programmable automaton according to claim 1, characterised in that the entity totally designating the application comprises an "identity" entity (44) collecting the information capable of identifying the application program as well as "password" data capable of authorising access to the program and to the data.

14. Programmable automaton according to claim 13, characterised in that the "identity" entity (44) comprises at least
- one project name datum,
- one program code datum,
- one program version number datum,
- one automaton type datum,
- one project leader's name datum, and
- one date of creation of the project datum.

15. Programmable automaton according to claim 13, characterised in that the "password" data comprise at least
- one "line modification code" datum capable of authorising ail the functions including the modification of the operational automaton program,
- one "designer password" datum capable of authorising all functions except line modification of the program,
- one "operator password" datum capable of authorising all the functions except line modification, the loading of a program into the automaton, the forcing of the inputs and outputs and the modification of protected data,
- "a forcing code" datum capable of authorising, with the operator password, the forcing of the input and output variables,
- and a "protected data modification code" datum capable of authorising, with the operator password, the modification of said data.

16. Programmable automaton according to claim 4, characterised in that the functional boxes comprise at least:
- a name datum representing the code of the box,
- a condition datum (76) representing the input condition required for validating the execution of the function associated with said box, and
- parameter data representing internal input and output parameters of said box.

17. Programmable automaton according to claim 5, characterised in that each entity has at least one graphic representation graphically describing the operation of the application associated with said entity and a textual representation textually describing the operation of the application associated with said entity.

18. Programmable automaton according to claim 1, characterised in that the generated code processes Boolean, digital and alphabetic data.
